# EUROPÄISCHE PATENTSCHRIFT

(11) **EP 4 255 777 B1**
(45) Veröffentlichungstag und Bekanntmachung des Hinweises auf die Patenterteilung: **05.03.2025**
(21) Anmeldenummer: 21820510.2
(22) Anmeldetag: 25.11.2021
(51) Int. Cl.: B60S 1/56, B60R 11/04

(54) **MODULGEHÄUSE, SPIEGELERSATZSYSTEM, FAHRZEUG**
MODULE HOUSING, MIRROR REPLACEMENT SYSTEM, VEHICLE
BOÎTIER DE MODULE, SYSTÈME DE REMPLACEMENT DE MIROIR, VÉHICULE

(30) Priorität: 04.12.2020 DE 102020132253
(43) Veröffentlichungstag der Anmeldung: 11.10.2023
(73) Patentinhaber: ZF CV Systems Global GmbH, 3006 Bern (CH)
(72) Erfinder: COHRS, Jan, 30173 Hannover (DE); RICKE, Janik, 31311 Uetze (DE)
(74) Vertreter: Ohlendorf, Henrike
(86) Internationale Anmeldenummer: PCT/EP2021/082996
(87) Internationale Veröffentlichungsnummer: WO 2022/117433

(56) Entgegenhaltungen:
- EP-A1- 3 431 863
- DE-A1- 102016 101 744
- JP-A- 2018 118 717
- JP-A- 2019 077 383
- US-A1- 2011 073 142
- US-A1- 2019 068 845
- US-A1- 2020 047 719

## Beschreibung

Die Erfindung betrifft ein Spiegelersatzsystem und ein Fahrzeug. Modulgehäuse, insbesondere für Kameramodule für Spiegelersatzsysteme sind allgemein bekannt. Mittels eines Spiegelersatzsystem können eine oder mehrere Seitenspiegel oder dergleichen äußere Rückspiegel eines Fahrzeugs ersetzt werden, indem eine Kamera den normalerweise vom Seitenspiegel erfassten Bereich aufnimmt und diesen verzögerungsfrei bzw. in Echtzeitbedingungen auf einem geeigneten Wiedergabegerät, insbesondere einem Bildschirm, für den Fahrer des Fahrzeugs sichtbar wiedergibt. Bevorzugt weisen derartige Kameramodule einen kompakten, insbesondere ein aerodynamisch günstigen Aufbau auf, insbesondere verglichen mit konventionellen Seitenspiegeln. Auch bieten derartige Kameramodule gegenüber konventionellen Seitenspiegeln Vorteile hinsichtlich des Designs eines Fahrzeugs, insbesondere weil sie aufgrund ihres kompakten Aufbaus weniger von der Gestaltung des eigentlichen Fahrzeugs ablenken. Somit bieten Spiegelersatzsystem gestalterische Vorteile für ein Fahrzeug.

Durch die Wahl geeigneter Kameras bzw. Kameraobjektive können weitere ergonomische Vorteile gegenüber konventionellen Seitenspiegeln erzielt werden. Vorteilhaft kann die Sichtbarkeit des Außenbereichs durch entsprechend lichtstarke Kameras verbessert werden, wodurch insbesondere bei wenig Licht, beispielsweise während der Nacht oder in Tunneln, eine bessere Erfassung des Außenbereichs durch den Fahrer ermöglicht wird. Vorteilhaft kann ebenfalls der sichtbare Bereich, insbesondere durch die Wahl einer entsprechenden Brennweite des Kameraobjektivs, vergrößert werden, und die Verkehrssicherheit des Fahrzeugs und anderer Verkehrsteilnehmer vorteilhaft erhöht werden. Hierzu ist beispielsweise eine Kamera mit einem Weitwinkelobjektiv geeignet.

Problematisch ist eine, insbesondere während des Betriebs des Fahrzeugs auftretende, Verschmutzung der Kamera und insbesondere eine Objektivoberfläche der Kamera eines Kameramoduls. Dies ist insbesondere der Fall, weil derartige Kameramodule in der Regel außen an das Fahrzeug angebracht sind um einen entsprechenden Außenbereich des Fahrzeugs optisch zu erfassen, und dort entsprechenden Betriebs- und Witterungsbedingungen ausgesetzt sind.

Es existieren bereits Reinigungslösungen für konventionelle Seitenspiegel bei Fahrzeugen. So zeigt EP 1 084 921 B1 allgemein ein Verfahren zur Reinigung eines Außenrückspiegels an Kraftfahrzeugen, insbesondere Nutzfahrzeugen wie Lastkraftwagen und Omnibussen, bei dem nach Initiierung eines Reinigungsvorganges durch den Fahrer zunächst über wenigstens eine Düse am Außenseitenspiegel Reinigungsflüssigkeit auf die Spiegelfläche aufgesprüht und anschließend bzw. später die Spiegelfläche mittels ihr zugeführter Druckluft, durch die die Reinigungsflüssigkeit und Schmutzpartikel weggeblasen werden, gesäubert wird, wobei die Reinigungsflüssigkeit für die Spiegelreinigung gesteuert aus einer Leitung abgezweigt wird, die Teil einer fahrzeugintem vorhandenen Windschutzscheiben- und/oder Scheinwerferreinigungsvorrichtung ist, und die Druckluft für die Spiegelreinigung gesteuert aus einem Druckluftbehälter bereitgestellt wird, der Teil der fahrzeugintemen Druckluftanlage ist.

Das in EP 1 084 921 B1 gezeigte System somit bereits grundsätzlich vorteilhaft den Einsatz von Reinigungsfluiden zur Reinigung eines Seitenspiegels. Ein System zur Reinigung eines Seitenspiegels mittels Druckluft wird in US 7 311 405 B2 beschrieben.

Weiterhin problematisch ist die Reinigung von Kameras bzw. Kameramodulen bei Spiegelersatzsystemen. Insbesondere betrifft dies einen kompakten und einfachen Aufbau sowie eine Integration einer Reinigungsanordnung in ein Kameramodul. Insbesondere besteht kein Ansatz, eine Reinigungsanordnung in kompakter, vorteilhaft aerodynamisch begünstigter, Weise für ein Kameramodul vorzusehen.

Wünschenswert wäre es daher, ein Modulgehäuse für ein Kameramodul eines Spiegelersatzsystems anzugeben, welches zumindest eines der genannten Probleme löst, insbesondere den oben genannten gestalterischen und ergonomischen Vorteilen von Spiegelersatzsystem gerecht wird. US-A-2020047719 offenbart den Oberbegriff des Anspruchs 1.

An dieser Stelle setzt die Erfindung an, deren Aufgabe es ist, in verbesserter

Weise ein Spiegelersatzsystem anzugeben, welches zumindest eines der genannten Probleme löst. Insbesondere soll eine Integration einer Reinigungsanordnung in ein Kameramodul mit einem kompakten und einfachen Aufbau erreicht werden.

Die Aufgabe, betreffend das Spiegelersatzsystem wird durch die Erfindung mit einem Spiegelersatzsystem des Anspruchs 1 gelöst. Die Erfindung geht aus von einem Modulgehäuse für ein Spiegelersatzsystem, mit einem Aufnahmekörper, der mindestens eine Aufnahmeöffnung und mindestens eine Sichtöffnung einer Kamerahalterung zum Befestigen einer Kamera aufweist, wobei die mindestens eine Sichtöffnung eine Sicht der Kamera, insbesondere einer Objektivoberfläche der Kamera, aus dem Modulgehäuse ermöglicht. Erfindungsgemäß ist bei dem Modulgehäuse vorgesehen, dass der Aufnahmekörper des Weiteren eine Halteeinrichtung aufweist für eine Reinigungsanordnung, wobei die Reinigungsanordnung wenigstens eine Reinigungsdüse und eine Fluidleitung für ein Reinigungsfluid mit mindestens einem Leitungskörper aufweist, wobei die Halteeinrichtung aufweist:
- eine Leitungsaufnahme, für die Fluidleitung, insbesondere über einen Leitungsanschluss,
- eine Düsenaufnahme für die Reinigungsdüse, die derart angeordnet ist, dass
- die mindestens eine Sichtöffnung, insbesondere die Objektivoberfläche, aus der Reinigungsdüse mit Reinigungsfluid beaufschlagbar ist.

Die Erfindung geht von der Überlegung aus, dass Verschmutzungen auch bei Spiegelersatzsystem problematisch sind, da sie das Kamerabild verschlechtern und somit die Sicht des Fahrers beeinträchtigen. Die Erfindung hat erkannt, dass mittels einer Reinigungsanordnung derartige Verschmutzungen effektiv und vorteilhaft ohne manuellen Reinigungsvorgang entfernt werden können.

Durch eine Halteeinrichtung für die Reinigungsanordnung mit einer Leitungsaufnahme für die Fluidleitung kann eine nach Gestaltungsaspekten vorteilhafte Integration einer Reinigungsanordnung in das Modulgehäuse erfolgen. Dadurch, dass der Aufnahmekörper die Halteeinrichtung aufweist, kann die Reinigungsanordnung innerhalb des Aufnahmekörpers, und vorteilhaft innerhalb des Modulgehäuses verlaufen, ohne eine äußere Form des Kameramoduls zu beeinträchtigen.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Insbesondere ist die Leitungsaufnahme mittels einer Leitungsführung und/oder einem Leitungshalter realisiert. Bevorzugt ist die Fluidleitung in einer Leitungsführung aufgenommen und in dieser sind Leitungshalter angeordnet, welche die Fluidleitung halten. Grundsätzlich reicht es jedoch ggfs. auch mit Vorteil aus, die Fluidleitung in die Leitungsführung zu legen, sodass die Leitungshalter entbehrlich sein können. Es kann auch die Leitungsführung ein oder mehrere geeignet realisierte Haltungsmittel realisieren. Beispielsweise kann die Leitungsaufnahme passgenau für die Fluidleitung jedenfalls an bestimmten Haltestellen realisiert sein, sodass diese Haltestellen als Haltemittel -insofern also statt der sonst separat vorzusehenden Leitungshalter-- dienen. Umgekehrt kann eine Leitungsaufnahme auch nur mit einer Anzahl von Leitungshaltern realisiert sein, ggfs. könnten diese an einer Außenseite des Aufnahmekörpers angebracht sein, sodass eine Leitungsführung innerhalb des Aufnahmekörpers jedenfalls weitgehend entbehrlich sein könnte. Eine Leitungsaufnahme kann insofern in verschiedenen Ausführungen realisiert sein, von denen hier nur einige genannt sind. In der Zeichnung ist ein Ausführungsbeispiel in Bezug auf die besonders bevorzugte Leitungsaufnahme gezeigt und beschrieben, die mittels einer Leitungsführung und/oder einem Leitungshalter realisiert ist.

Als Halteeinrichtung ist im Rahmen der Erfindung insbesondere eine Anzahl von Leitungsaufnahmen, insbesondere Leitungsführungen und/oder Leitungshalter umfassenden, Merkmalen zu verstehen, die durch Hinzufügen von Material zum Aufnahmekörper oder durch Entfernen von Material vom Aufnahmekörper erzeugt werden und durch ihre Anordnung und Ausbildung die Aufnahme einer Reinigungsanordnung ermöglichen.

Vorteilhaft ist vorgesehen, dass die Reinigungsdüse mit einer Steckverbindung an die Fluidleitung angebunden ist. Mittels einer Steckverbindung kann vorteilhaft eine einfache Montage der Reinigungsdüse an die Fluidleitung ermöglicht werden. Insbesondere ist es mittels einer Steckverbindung möglich, in einfacher Weise unterschiedliche Reinigungsdüsen in das Modulgehäuse einzusetzen. Durch unterschiedliche Reinigungsdüsen kann das Modulgehäuse bei der Montage individuell auf ein Produkt oder eine Anwendung angepasst werden, insbesondere zur Erzeugung unterschiedlicher Spritzmuster und/oder zur Anpassung der durch die Reinigungsdüse bereitgestellte Reinigungsleistung an unterschiedlich große Kameras. In Weiterbildungen ist die mindestens eine Reinigungsdüse an den Aufnahmekörper und/oder das Modulgehäuse angeformt, beispielsweise in Form eines einstückigen Spritzgussteils. In derartigen Weiterbildungen kann mittels einer Steckverbindung vorteilhaft eine fluidführende Verbindung zwischen der Reinigungsdüse am Modulgehäuse und der Reinigungsanordnung, insbesondere der Fluidleitung, zuverlässig erzeugt werden. In anderen vorteilhaften Weiterbildungen kann eine Reinigungsdüse durch einen vom Modulgehäuse separaten Düsenkörper gebildet sein, der in eine Düsenaufnahme des Modulgehäuses eingesetzt wird.

Vorteilhaft ist vorgesehen, dass der Leitungshalter ein Leitungsklipp ist. Ein Leitungsklipp weist insbesondere eine elastisch verformbare Klammer oder dergleichen Schenkel oder Haken auf, mittels dem ein Leitungskörper einer Fluidleitung aufgenommen und kraftschlüssig und/oder formschlüssig befestigt werden kann. Insbesondere kann eine einfache Montage durch ein Eindrücken des Leitungskörpers in den Leitungsklipp, insbesondere ohne dass weiteres Werkzeug notwendig ist, erfolgen. Insbesondere kann mittels eines Leitungsklipps ein wiederlösbareres Befestigen eines Leitungskörpers einer Fluidleitung erfolgen.

Vorteilhaft ist vorgesehen, dass die Leitungsführung als ein Hohlkanal im Aufnahmekörper gebildet ist. Ein Hohlkanal ist insbesondere als ein sich entlang der Fluidleitung oder einem Leitungsbündel erstreckender Kanal. Ein Hohlkanal erstreckt sich insbesondere von einem Leitungsanschluss zu einer Düsenaufnahme. Ein Hohlkanal kann vorteilhaft innerhalb des Aufnahmekörpers, jedoch in einer Randzone des Aufnahmekörpers verlaufen, und insbesondere zu einer Seite geöffnet sein, sodass vorteilhaft eine verbesserte Zugänglichkeit, insbesondere für Montage- und Reparaturzwecke, ermöglicht wird. Insbesondere kann ein Hohlkanal über eine Abdeckung verschlossen werden. Eine Abdeckung kann insbesondere als Deckel ausgebildet sein. Eine Abdeckung kann insbesondere der Art ausgebildet sein, dass sie im montierten Zustand bündig mit dem Aufnahmekörper und/oder dem Modulgehäuse abschließt.

Im Rahmen einer bevorzugten Weiterbildung ist vorgesehen, dass der Leitungsanschluss als eine Klemmdurchführung für die Fluidleitung in den Aufnahmekörper gebildet ist. Durch eine Klemmdurchführung kann vorteilhaft ein Leitungskörper einer Fluidleitung hindurchgeführt werden. Insbesondere weist eine Klemmdurchführung elastisches Material auf, welches sich dichtend um den hindurchgeführten Leitungskörper schmiegt. Ein derartiges elastisches Material kann beispielsweise durch einen Schaum oder einen elastischen Kunststoff gebildet sein. Mittels einer Klemmdurchführung können vorteilhaft existierende Leitungskörper für Fluidleitungen, die bereits im Fahrzeug und/oder einem Fluidversorgungsmodul vorhanden sind, in ein Modulgehäuse eingeführt und dort angeschlossen werden.

Im Rahmen einer bevorzugten Weiterbildung ist vorgesehen, dass Leitungsanschluss als Schraubanschluss ausgebildet ist und insbesondere eine Schottverschraubung, eine Schlauchtülle, oder eine Steckverschraubung oder eine Kombination dieser Arten von Leitungsanschlüssen aufweist.

Vorteilhaft ist vorgesehen, dass die Fluidleitung eine Druckluft-Fluidleitung für eine Druckluft aufweist, insbesondere in Form eines Druckluft-Leitungskörpers. Mittels einer Druckluft-Fluidleitung kann eine Reinigungsdüse vorteilhaft mit Druckluft versorgt werden, um eine Druckluftströmung und/oder einen Druckluft-Reinigungsimpuls auf eine Objektivoberfläche zu leiten, um vorteilhaft Verschmutzungen, Nässe und dergleichen das Kamerabild störende Artefakte von der Objektivoberfläche zu entfernen.

Vorteilhaft ist vorgesehen, dass die Fluidleitung eine Flüssigkeits-Fluidleitung für eine Flüssigkeit aufweist, insbesondere in Form eines Flüssigkeits-Leitungskörpers. Mittels einer Flüssigkeits-Fluidleitung kann eine Reinigungsdüse vorteilhaft mit Reinigungsflüssigkeit versorgt werden, um eine Flüssigkeitsströmung und/oder einen Flüssigkeits-Reinigungsimpuls auf eine Objektivoberfläche zu leiten, um vorteilhaft Verschmutzungen zu entfernen und/oder aufzuweichen. Eine Reinigungsflüssigkeit kann durch Wasser gebildet sein. Eine Reinigungsflüssigkeit kann optional weitere Reinigungszusätze aufweisen.

Im Rahmen einer bevorzugten Weiterbildung vorgesehen, dass eine Fluidleitung eine Druckluft-Fluidleitung und eine Flüssigkeits-Fluidleitung aufweist. Insbesondere weist eine derartige Fluidleitung einen Druckluft-Leitungskörper und einen Flüssigkeits-Leitungskörper auf, die vorteilhaft parallel zueinander im Spiegelersatzsystem, insbesondere im Modulgehäuse, geführt werden, besonders vorteilhaft in Form eines Leitungsbündels zusammengehalten oder befestigt sind.

Vorteilhaft ist vorgesehen, dass die Halteeinrichtung mindestens eine Stellmittelaufnahme für ein Fluidstellmittel, insbesondere ein Ventil, ein Schnellentlüftungsventil, einen Druckzylinder oder eine Pumpe, aufweist, wobei die Stellmittelaufnahme eine Halteverbindung aufweist und sich insbesondere die Stellmittelaufnahme an die Leitungsführung anschließt. Die Stellmittelaufnahme ist vorteilhaft in das Spiegelersatzsystem, insbesondere in das Modulgehäuse, integriert.

Ein Fluidstellmittel beschreibt jegliche Einrichtung zum Stellen, insbesondere Schalten oder Fördern, von Reinigungsfluid, insbesondere Druckluft oder Reinigungsflüssigkeit. Das Fluidstellmittel kann insbesondere als Ventil ausgebildet sein. Das Ventil kann vorteilhaft als 2/2-Wegeventil, insbesondere als 2/2-Wege-Magnetventil, ausgebildet sein, insbesondere als pneumatisches 2/2-Wegeventil für eine Druckluft-Fluidleitung oder als hydraulisches 2/2-Wegeventil für eine Flüssigkeits-Fluidleitung. Bei einem hydraulischem 2/2-Wegeventil weist das Fahrzeug insbesondere ein weiteres Fluidstellmittel in Form einer Pumpe auf zum Fördern der Reinigungsflüssigkeit. Die Pumpe kann insbesondere durch eine Pumpe gebildet sein, die einem anderen Primärzweck dient, beispielsweise eine Wischwasserpumpe. Ein Fluidstellmittel kann vorteilhaft als Druckzylinder ausgebildet sein, der sowohl eine Luftkammer als auch eine Flüssigkeitskammer aufweist. Ein Druckzylinder ermöglicht vorteilhaft unter relativ geringem apparativen Aufwand, insbesondere mit nur einer Druckquelle, sowohl einen Flüssigkeits-Reinigungsimpuls als auch einen Druckluft-Reinigungsimpuls zu erzeugen. Dies wird insbesondere mit einem innerhalb des Druckzylinders angeordneten, bewegbaren Trennmittels erreicht, welches das Zylindervolumen in eine Luftkammer und eine Flüssigkeitskammer aufteilt und dabei beide Kammern voneinander dichtend abtrennt. Durch dieses Trennmittel ist eine Druckübertragung zwischen der Druckluft und der Reinigungsflüssigkeit möglich, wodurch eine Druckluftquelle, insbesondere eine Flüssigkeitspumpe für die Reinigungsflüssigkeit, eingespart werden kann, weil die Druckbeaufschlagung der Reinigungsflüssigkeit mittels der Druckluftquelle erfolgen kann. Vorteilhaft kann mit einem Druckzylinder ohne hydraulische Ventile oder dergleichen hydraulische Schaltmittel ein Flüssigkeits-Reinigungsimpuls bereitgestellt werden. Ein im Modulgehäuse aufgenommener Druckzylinder ermöglicht eine Bereitstellung eines Flüssigkeits-Reinigungsimpulses nah an der Reinigungsdüse mit vorteilhaft geringen Druckverlusten durch lange Fluidleitungen.

In vorteilhaften Weiterbildungen ist vorgesehen, dass die Halteeinrichtung eine Anzahl an Stellmittelaufnahmen aufweist. Insbesondere können mittels mehrerer, insbesondere entlang einer Leitungsführung angeordneter, Stellmittelaufnahmen Reinigungsanordnungen mit mehreren, bevorzugt in Reihe geschalteten, Fluidstellmitteln realisiert werden.

Vorteilhaft ist vorgesehen, dass das Ventil als Rückschlagventil ausgebildet ist. Dies ist insbesondere sinnvoll bei Weiterbildungen mit einer Kombinationsdüse und mehreren, insbesondere zwei, Fluidleitungen, um ein Strömen eines Reinigungsfluids von einer Fluidleitung in die andere zu verhindern. Eine Stellmittelaufnahme für ein Rückschlagventil ist vorteilhaft nahe an der Reinigungsdüse angeordnet, um ein Totvolumen, das bei jedem Reinigungszyklus durch das jeweils andere Medium freigespült werden muss, verringert wird. Insbesondere wird vorteilhaft eine Kombinationsleitung möglichst kurzgehalten. Der Verbrauch von Reinigungsfluid, insbesondere von Reinigungsflüssigkeit, wird somit vorteilhaft reduziert.

Bei einer Stellmittelaufnahme für ein Schnellentlüftungsventil bietet sich durch das Modulgehäuse der Vorteil, dass das Schnellentlüftungsventil nahe an der Kamera mit der zu reinigenden Objektivoberfläche angeordnet werden kann. Durch einen kurzen Leitungsabstand zwischen dem Schnellentlüftungsventil und der Reinigungsdüse entstehen vorteilhaft lediglich geringe Druckverluste, was zu einem relativ starken Druckluft-Reinigungsimpuls mit relativ hoher Reinigungsleistung führt. Vorteilhaft ist vorgesehen, dass das Schnellentlüftungsventil in Kombination mit einem 3/2-Wegeventil angeordnet ist, und insbesondere die Halteeinrichtung entsprechend zwei Stellmittelaufnahmen in einer Leitungsführung aufweist.

Im Rahmen einer bevorzugten Weiterbildung ist vorgesehen, dass die Halteeinrichtung eine als Pumpenaufnahme ausgebildete Stellmittelaufnahme für ein als Pumpe ausgebildetes Fluidstellmittel aufweist, wobei sich insbesondere die Pumpenaufnahme an die Leitungsführung anschließt. Eine Pumpenaufnahme ist insbesondere in oder an der Leitungsführung für eine Flüssigkeits-Fluidleitung angeordnet. Mittels einer Pumpe kann vorteilhaft Reinigungsflüssigkeit aus einer, insbesondere drucklosen, Flüssigkeitsquelle gefördert werden und, insbesondere in Form einer Flüssigkeitsströmung, an einer Reinigungsdüse bereitgestellt werden zum Beaufschlagen der Objektivoberfläche. Eine Pumpe kann insbesondere als Wischwasserpumpe oder dergleichen, vorteilhaft kompakt ausgeführten, Pumpe gebildet sein.

Vorteilhaft ist vorgesehen, dass die Halteverbindung einen Befestigungsklipp aufweist zum, bevorzugt wiederlösbaren, Befestigen des Ventils. Insbesondere ist der Befestigungsklipp ausgebildet, das Ventil in einer vordefinierten Stellmittelposition zu befestigen, insbesondere mittels einer Kraft- und/oder Formschlussverbindung. Eine Pumpenaufnahme kann in analoger Weise eine Halteverbindung, insbesondere einen Befestigungsklipp, zum Befestigen der Pumpe aufweisen. Ein Befestigungsklipp weist - analog zum Leitungsklipp - eine elastisch verformbare Klammer, Schenkel oder dergleichen elastisches Element zum, bevorzugt wiederlösbaren, Befestigen eines Ventils oder einer Pumpe auf. Eine Halteverbindung, insbesondere ein Befestigungsklipp, kann somit sowohl zum Befestigen eines Ventils, als auch zum Befestigen einer Pumpe, ausgebildet sein. Ein Befestigungsklipp oder ein Leitungsklipp ermöglicht vorteilhaft eine einfache Montage, insbesondere ohne dass spezielles Werkzeug benötigt wird.

Vorteilhaft ist vorgesehen, dass die Halteverbindung ein Halteband ist oder ein Halteband aufweist. Ein Halteband ist vorteilhaft als flexibles und/oder elastisches Band ausgeführt und ausgebildet zum Umgreifen des Fluidstellmittels zwecks Befestigung in der Stellmittelaufnahme. Ein Halteband kann vorteilhaft in der Art eines Kabelbinders ausgebildet sein und analog zu dem Verschließen eines Kabelbinders rastend formschlüssig in eine in der Stellmittelaufnahme angeordnete Haltebandaufnahme. Mittels eines Haltebands kann ein Fluidstellmittel unter relativ geringem Aufwand und insbesondere ohne Werkzeug montiert werden.

Vorteilhaft ist vorgesehen, dass der Leitungshalter als ein Leitungshalteband ausgebildet ist. Ein Leitungshalteband ist - analog zu einem Halteband - vorteilhaft als flexibles und/oder elastisches Band ausgeführt und ausgebildet zum Umgreifen eines oder mehrerer Leitungskörper zwecks Befestigung, insbesondere in der Leitungsführung. Ein Leitungshalteband kann - wie ein Halteband - vorteilhaft in der Art eines Kabelbinders ausgebildet sein und analog zu dem Verschließen eines Kabelbinders rastend formschlüssig in eine in der Halteeinrichtung bzw. dem Aufnahmekörper angeordnete Leitungshaltebandaufnahme. Mittels eines Leitungshaltebands kann ein Leitungskörper unter relativ geringem Aufwand und insbesondere ohne Werkzeug montiert werden.

Vorteilhaft ist vorgesehen, dass die Halteeinrichtung ein Aufnahmemerkmal, insbesondere einen Aufnahmesteckanschluss, aufweist, das ausgebildet ist, mit einem Positioniermerkmal, insbesondere mit einem Positionierstecker, eines Ventilgehäuses in Eingriff gebracht zu werden.

Vorteilhaft ist vorgesehen, dass die der Leitungshalter als ein Einfach-Leitungshalter oder Zweifach-Leitungshalter, insbesondere Einfach-Leitungsklipp oder Zweifach-Leitungsklipp, ausgebildet ist. Mittels eines Zweifach-Leitungshalters wird vorteilhaft eine konstruktiv einfache und platzsparende, parallele Anordnung von zwei Fluidleitungen in der Halteeinrichtung bzw. dem Aufnahmekörper erreicht.

Vorteilhaft ist mehr als eine Sichtöffnung in dem Modulgehäuse vorgesehen. Mit einem Modulgehäuse mit mehr als einer Sichtöffnung können vorteilhaft Kameras mit mehr als einem Objektiv und entsprechend mehr als einer Objektivoberfläche in dem Modulgehäuse aufgenommen werden. Vorteilhaft ist mehr als eine Kamerahalterung, insbesondere mit jeweils einer Sichtöffnung, vorgesehen. Mit einem Modulgehäuse mit mehr als einer Kamerahalterung können vorteilhaft mehrere Kameras in dem Modulgehäuse aufgenommen werden. Vorteilhaft ist jeder Sichtöffnung mindestens eine Düsenaufnahme, zur Aufnahme einer Reinigungsdüse, zugeordnet.

Die Erfindung führt auf ein Spiegelersatzsystem zur Anbringung an ein Fahrzeug, aufweisend ein Modulgehäuse und
- eine Reinigungsanordnung umfassend mindestens eine Reinigungsdüse, insbesondere eine Druckluft-Reinigungsdüse, eine Flüssigkeits-Reinigungsdüse und/oder eine Kombinationsdüse, und mindestens eine Fluidleitung, wobei die Reinigungsanordnung in der Halteeinrichtung aufgenommen ist. Bei dem Spiegelersatzsystem werden die Vorteile des Modulgehäuses vorteilhaft genutzt.

Vorteilhaft kann das Spiegelersatzsystem eine elektronische Steuereinheit aufweisen zur Verarbeitung der mittels der Kamera erfassten Bilddaten. Vorteilhaft kann das Spiegelersatzsystem mindestens ein Wiedergabegerät, insbesondere Bildschirm, aufweisen zur Anzeige der mittels der Kamera erfassten Bilddaten. In einer vorteilhaften Weiterbildung des Spiegelersatzsystems kann die Reinigungsdüse als Kombinationsdüse ausgebildet sein und insbesondere einen Ventilkörper aufweisen, an den zwei oder mehr Fluidleitungen, insbesondere zwei oder mehr Leitungskörper, über jeweils einen Anschluss fluidführend angeschlossen werden können. Eine Kombinationsdüse kann vorteilhaft als Ringsdüse ausgebildet sein. Eine Kombinationsdüse kann in Weiterbildungen ausgebildet sein, mehrere Reinigungsfluide vollständig separat zu führen. Eine Kombinationsdüse kann in anderen Weiterbildungen ausgebildet sein, mehrere Reinigungsfluide zu mischen, beispielsweise nach einem Venturi- oder dergleichen Prinzip. In einer vorteilhaften Weiterbildung des Spiegelersatzsystems kann die Reinigungsanordnung zwei oder mehr Reinigungsdüsen, insbesondere eine Druckluft-Reinigungsdüse und eine Flüssigkeits-Reinigungsdüse, aufweisen.

In einer vorteilhaften Weiterbildung des Spiegelersatzsystems ist mindestens eine Kamera, vorteilhaft genau eine Kamera, vorgesehen, die in der Kamerahalterung des Aufnahmekörpers aufgenommen ist und insbesondere mindestens eine in der Sichtöffnung der Kamerahalterung angeordnete Objektivoberfläche aufweist. In Weiterbildungen mit mehreren Kameras ist vorteilhaft eine entsprechende Anzahl an Kamerahalterungen und/oder Sichtöffnungen vorgesehen. In vorteilhaften Weiterbildungen weist die Kamera mindestens ein Objektiv, insbesondere mehrere Objektive, mit jeweils einer Objektivoberfläche auf, wobei insbesondere die mindestens eine Objektivoberfläche in jeweils einer Sichtöffnung der Kamerahalterung oder in einer gemeinsamen Sichtöffnung der Kamerahalterung angeordnet ist.

In vorteilhaften Weiterbildungen des Spiegelersatzsystems ist vorgesehen, dass die Reinigungsanordnung mindestens ein Fluidstellmittel, insbesondere ein Ventil, vorteilhaft ein 2/2-Wegeventil oder ein 3/2-Wegeventil oder ein Rückschlagventil oder ein Schnellentlüftungsventil, oder einen Druckzylinder oder eine Pumpe aufweist.

Nach der Erfindung ist es vorgesehen, dass die Reinigungsanordnung ein Schnellentlüftungsventil aufweist, das ausgebildet ist zum Empfangen von Druckluft und zum Bereitstellen eines Druckluft-Reinigungsimpulses an die Reinigungsdüse, wobei das Schnellentlüftungsventil in einer Stellmittelaufnahme der Halteeinrichtung aufgenommen ist. Vorteilhaft kann die Reinigungsanordnung ein weiteres Ventil, insbesondere ein 3/2-Wegeventil, zum Belüfteten und Entlüften des Schnellentlüftungsventils aufweisen.

In einer vorteilhaften Weiterbildung des Spiegelersatzsystems ist vorgesehen, dass das Fluidstellmittel ein Stellmittelgehäuse aufweist mit einem Positioniermerkmal, insbesondere mit einem Positionierstecker, das mit einem Aufnahmemerkmal, insbesondere einem Aufnahmesteckanschluss des Aufnahmekörpers in Eingriff gebracht werden kann, um eine Stellmittelposition des Stellmittelgehäuses relativ zu dem Modulgehäuse festzulegen. Das Stellmittelgehäuse kann beispielsweise durch ein Ventilgehäuse oder ein Schnellentlüftungsventilgehäuse oder ein Pumpengehäuse gebildet sein.

In einer vorteilhaften Weiterbildung des Spiegelersatzsystems ist ein Fluidversorgungsmodul vorgesehen, ausgebildet zum Bereitstellen eines Druckluft-Reinigungsimpulses und/oder einer Druckluftströmung und/oder eines Flüssigkeits-Reinigungsimpulses und/oder einer Flüssigkeitsströmung.

Die Erfindung führt auf ein Fahrzeug, insbesondere Nutzfahrzeug oder PKW, aufweisend: - ein Spiegelersatzsystem gemäß der Erfindung. Insbesondere weist das Fahrzeug eine Druckluftversorgungsanlage auf zum Bereitstellen von Druckluft. Insbesondere ist das Spiegelersatzsystem derart angeordnet und ausgebildet, dass die Kamera mit einer Objektivoberfläche zur optischen Erfassung eines Außenbereichs, insbesondere eines rückwärtigen Außenbereichs, des Spiegelersatzsystems angeordnet ist. Beim Fahrzeug gemäß der Erfindung werden die Vorteile des Spiegelersatzsystems gemäß der Erfindung vorteilhaft genutzt. Ein Nutzfahrzeug umfasst insbesondere Lastkraftwagen, landwirtschaftliche Fahrzeuge und Baumaschinen. Insbesondere bei Nutzfahrzeugen, die im Einsatz regelmäßig Verschmutzung ausgesetzt sind, beispielsweise in der Landwirtschaft oder im Baugewerbe, kann ein Spiegelersatzsystem gemäß dem Konzept der Erfindung besonders vorteilhaft eingesetzt werden.

Es soll verstanden werden, dass das Spiegelersatzsystem gemäß der Erfindung und das Fahrzeug gemäß der Erfindung gleiche und ähnliche Unteraspekte aufweisen, wie sie insbesondere in den abhängigen Ansprüchen niedergelegt sind. Insofern wird für die Weiterbildung eines Aspekts der Erfindung auch auf die Weiterbildungen der anderen Aspekte der Erfindung verwiesen.

Ausführungsformen der Erfindung werden nun nachfolgend anhand der Zeichnung im Vergleich zum Stand der Technik, welcher zum Teil ebenfalls dargestellt ist, beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: ein Modulgehäuse gemäß dem Konzept der Erfindung eines Kameramoduls für ein Spiegelersatzsystem,
- Fig. 2: eine perspektivische Ansicht des in Fig. 1 gezeigten Modulgehäuses,
- Fig. 3A, Fig. 3B: jeweils eine perspektivische Ansicht eines schematisch dargestell- ten Fahrzeugs in Form eines Nutzfahrzeugs mit einem Modulgehäuse gemäß dem Konzept der Erfindung,
- Fig. 4A, Fig. 4B, Fig. 4C, Fig. 4D, Fig. 4E: schematische Darstellungen unterschiedlicher vorteilhafter und beispielhafter Weiterbildungen von Modulgehäusen für unterschiedliche Reinigungsanordnungen,
- Fig. 4F: ein Druckzylinder,
- Fig. 5A: ein Schnellentlüftungsventil,
- Fig. 5B, Fig. 5C: zwei Ansichten eines Stellmittelgehäuses mit beispielhaft gezeigten Positioniermerkmalen,
- Fig. 6: eine schematische Draufsicht eines Fahrzeugs mit einem Spiegelersatzsystem mit Modulgehäusen gemäß dem Konzept der Erfindung,
- Fig. 7A, Fig. 7B, Fig. 7C: unterschiedliche vorteilhafte Leitungsanschlüsse,
- Fig. 8A, Fig. 8B: unterschiedliche vorteilhafte Leitungshalter
- Fig. 8C, Fig. 8D: unterschiedliche vorteilhafte Halteverbindungen.

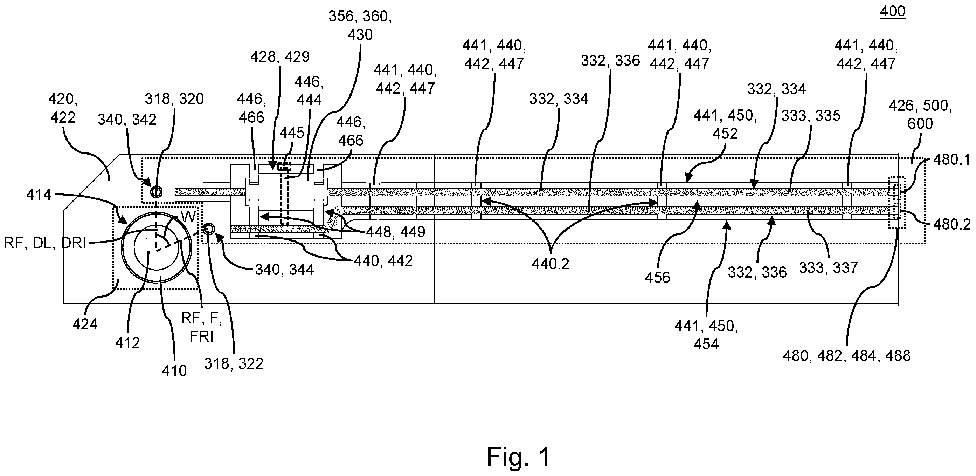

Fig. 1 zeigt ein Modulgehäuse 420 eines Kameramoduls 400 für ein Spiegelersatzsystem 900. Das Modulgehäuse 420 weist einen Aufnahmekörper 422 auf. Der Aufnahmekörper 422 weist eine Halteeinrichtung 426 auf, die vorteilhaft ausgebildet ist zur Aufnahme einer Reinigungsanordnung 500. Vorteilhaft ist das Modulgehäuse 420 als Aufnahmekörper 422 ausgebildet. Das Modulgehäuse 420 und/oder der Aufnahmekörper 422 und/oder die Halteeinrichtung 426 ist vorteilhaft aus einem geeigneten Kunststoff ausgebildet, der eine ausreichende mechanische und chemische Stabilität aufweist, um widerstandsfähig gegen äußere Einflüsse während des Einsatzes am Fahrzeug zu sein. Ein geeigneter Kunststoff kann beispielsweise Acrylnitril-Butadien-Styrol (ABS) oder Polycarbonat (PC) oder ein anderer Kunststoff oder eine Kombination von diesen sein.

Das Modulgehäuse 420 weist mindestens eine Sichtöffnung 414 auf, und relativ dazu angeordnet mindestens eine Kamerahalterung 424. Vorteilhaft ist die Kamerahalterung 424 und/oder die Sichtöffnung 414 als Aussparung in dem Aufnahmekörper 422 ausgebildet. Die Kamerahalterung 424 ist vorteilhaft zur wiederlösbaren Befestigung einer Kamera 410 in einer definierten Position ausgebildet, beispielsweise über Schrauben oder über elastische Klammern, Klipps, Schnapphaken oder dergleichen elastische Elemente. Die Kamera 410 ist derart in der Kamerahalterung 424 befestigt, dass eine Objektivoberfläche 412 der Kamera 410 eine freie Sicht durch die Sichtöffnung 414 aus dem Modulgehäuse 420 hat. Vorteilhaft ist die Kamera 410 derart in der Kamerahaltung 424 befestigt, dass die Objektivoberfläche 412 in der Sichtöffnung 414 angeordnet ist.

Das Modulgehäuse 420 weist mindestens eine Düsenaufnahme 340 auf, die ausgebildet ist zur Aufnahme einer Reinigungsdüse 318. Die vorliegend gezeigte Ausführungsform weist eine erste Düsenaufnahme 340 in Form einer Druckluft-Düsenaufnahme 342 auf, die ausgebildet ist zur Aufnahme einer Druckluft-Reinigungsdüse 320, und eine zweite Düsenaufnahme 340 in Form einer Flüssigkeits-Düsenaufnahme 344, die ausgebildet ist zur Aufnahme einer Flüssigkeits-Reinigungsdüse 322. In anderen vorteilhaften Ausführungsformen kann die Düsenaufnahme 340 ausgebildet sein zur Aufnahme einer Kombinationsdüse 324. Die mindestens eine Düsenaufnahme 340 ist insbesondere als Aussparung im Aufnahmekörper 422 ausgebildet. Die mindestens eine Düsenaufnahme 340 ist derart ausgebildet und angeordnet, dass eine darin aufgenommene Reinigungsdüse 318 ein Reinigungsfluid RF auf die Objektivoberfläche 412 leitet. Bei Ausführungsformen mit mehreren, insbesondere zwei Düsenaufnahmen 340, sind diese vorteilhaft versetzt um einen Winkel W um einen Mittelpunkt der Objektivoberfläche 412 versetzt angeordnet, wobei der Winkel W vorzugsweise zwischen 0 und 90° beträgt. Die Düsenaufnahme 340 und/oder die Reinigungsdüse 318 ist über eine Fluidleitung 332 fluidführend verbunden. Die Fluidleitung 332 weist einen Leitungskörper 333, insbesondere einen Druckluft-Leitungskörper 335 und/oder einen Flüssigkeits-Leitungskörper 337, auf. Vorteilhaft weist die Reinigungsanordnung 500 eine erste Fluidleitung 332 in Form einer Druckluft-Fluidleitung 334, und eine zweite Fluidleitung 332 in Form einer Flüssigkeits-Fluidleitung 336 auf. Die Druckluft-Fluidleitung 334 weist einen Leitungskörper 333 in Form eines Druckluft-Leitungskörpers 335 auf und die Flüssigkeits-Fluidleitung 336 weist einen Leitungskörper 333 in Form eines Flüssigkeits-Leitungskörpers 337 auf. Das Modulgehäuse 420, insbesondere die Halteeinrichtung 426, oder die Reinigungsanordnung 500 weist eine Aufnahmeöffnung 423 auf, durch die vorteilhaft die mindestens eine Fluidleitung 332 und etwaige weitere Leitungen wie Kameraleitungen 902 und/oder Steuerleitungen 904 aus dem Fahrzeug 1000 in das Modulgehäuse 420 geführt werden können. Vorteilhaft ist die Aufnahmeöffnung 423 derart ausgebildet und angeordnet, dass sie im montierten Zustand des Modulgehäuses 420 nicht sichtbar und vorteilhaft durch das Fahrzeug 1000, insbesondere durch eine A-Säule 1008 des Fahrzeugs 1000, dichtend abgedeckt ist. Vorteilhaft kann die Aufnahmeöffnung 423 ausgebildet sein zum Befestigen des Modulgehäuses 420 an das Fahrzeug 1000, insbesondere an eine A-Säule 1008 des Fahrzeugs 1000, und hierzu mindestens eine Schraubenaufnahme, wie z. B. eine Gewindebohrung, oder eine formschlüssig wiederlösbar verriegelbare Befestigungseinrichtung, wie z. B. einen oder mehrere Schnapphaken aufweisen.

Das Modulgehäuse 420, insbesondere die Aufnahmeöffnung 423, kann einen Leitungsanschluss 480, insbesondere in Form eines Steckanschlusses 482, aufweisen. Mittels des Leitungsanschlusses 480 kann die Reinigungsanordnung 500 fluidführend mit einer oder mehreren Reinigungsfluid-Quellen, insbesondere einer Druckluftquelle und/oder einer Flüssigkeitsquelle, verbunden werden. Vorliegend weist der Leitungsanschluss 480 einen ersten Leitungsanschluss 480.1 für die Druckluft-Fluidleitung 334 und einen zweiten Leitungsanschluss 480.2 für die Flüssigkeits-Fluidleitung 336 auf. In anderen vorteilhaften Ausführungsformen kann der Leitungsanschluss 480 als Klemmdurchführung 484 ausgebildet sein.

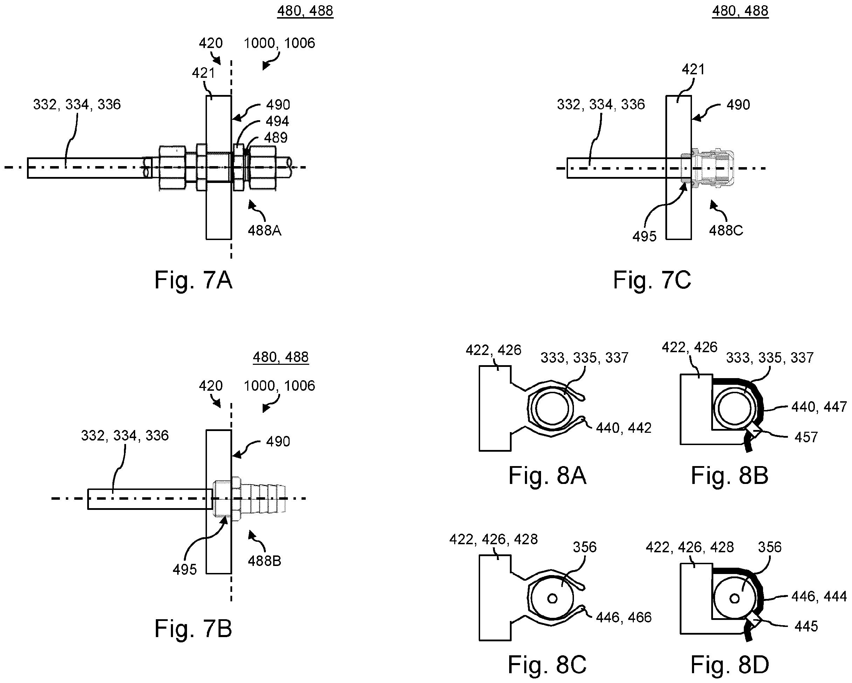

In anderen vorteilhaften Ausführungsformen kann der Leitungsanschluss 480 als Schraubanschluss 488 ausgebildet sein, insbesondere eine Schottverschraubung 488A, eine Schlauchtülle 488B, oder eine Steckverschraubung 488C oder eine Kombination der vorstehend genannten Arten von Leitungsanschlüssen 480 aufweisen. Eine Schottverschraubung 488A, wie in Fig. 7A beispielhaft gezeigt, kann vorteilhaft in eine Bohrung in einer Gehäusewandung 421 des Modulgehäuses 420, vorteilhaft auf der Fahrzeugseite 490 des Modulgehäuses 420, angeordnet sein. Die Schottverschraubung 488A kann vorteilhaft von außen mittels einer Mutter 494 auf einem Gewinde 489 festgeschraubt und somit an der Gehäusewandung 421 befestigt werden. Vom Fahrzeug 1000 kommende Leitungskörper 333 von Fluidleitungen 332 können vorteilhaft auf das Gewinde 489 geschraubt werden. Eine Schlauchtülle 488B, wie in Fig. 7B beispielhaft gezeigt, kann vorteilhaft mittels eines Einsatzgewindes 495 in die Gehäusewandung 421 geschraubt werden - wie in Fig. 7B gezeigt - und/oder auf einen modulgehäuseseitigen Gewindeanschluss des Leitungskörpers 333 einer Fluidleitung 332. Ein vom Fahrzeug 1000 kommender Leitungskörper 333 einer Fluidleitung 332 kann auf die Schlauchtülle 488B gesteckt zum Herstellen einer fluidführenden Verbindung und insbesondere mit einer Schlauchschelle fixiert werden.

Eine Steckverschraubung 488C, wie in Fig. 7C beispielhaft gezeigt, kann mittels eines Einsatzgewindes 495 in die Gehäusewandung 421 geschraubt werden - wie in Fig. 7C gezeigt - und/oder auf einen modulgehäuseseitigen Gewindeanschluss des Leitungskörpers 333 einer Fluidleitung 332. Ein vom Fahrzeug 1000 kommender Leitungskörper 333 einer Fluidleitung 332 kann in die Steckverschraubung 488C gesteckt werden zum Herstellen einer fluidführenden Verbindung.

Eine Aufnahmeöffnung 423, insbesondere ein Leitungsanschluss 480, kann vorteilhaft drehbar ausgebildet sein, insbesondere um eine Modulachse AM, um eine drehbare Verstellung des Kameramoduls 400, vorteilhaft im Betrieb des Fahrzeugs 1000, zu ermöglichen. Hierzu ist vorteilhaft der Leitungsanschluss 480, insbesondere ein Steckanschluss 482 oder eine Klemmdurchführung 484, ebenfalls drehbar ausgebildet und/oder angeordnet.

Vorliegend ist eine Leitungsaufnahme 441 mittels einer Leitungsführung 440 und einem Leitungshalter 450 realisiert. Mit Vorteil ist die Fluidleitung so in der Leitungsführung 441 aufgenommen und in dieser sind die Leitungshalter 450 angeordnet, welche die Fluidleitung halten.

Grundsätzlich reicht es bei hier nicht gezeigten vereinfachten Ausführungsformen ggfs. auch mit Vorteil aus, die Fluidleitung in die Leitungsführung zu legen, sodass die Leitungshalter entbehrlich sein können in einer ersten hier nicht gezeigten Ausführungsform. Es kann auch in einer hier nicht gezeigten Ausführungsform die Leitungsführung ein oder mehrere geeignet realisierte Haltungsmittel realisieren. Beispielsweise kann die Leitungsaufnahme passgenau für die Fluidleitung jedenfalls an bestimmten Haltestellen realisiert sein, sodass diese Haltestellen als Haltemittel -insofern also statt der sonst separat vorzusehenden Leitungshalter-- dienen. Umgekehrt kann eine Leitungsaufnahme auch nur mit einer Anzahl von Leitungshaltern realisiert sein, ggf. könnten diese an einer Außenseite des Aufnahmekörpers angebracht sein, sodass eine Leitungsführung innerhalb des Aufnahmekörpers jedenfalls weitgehend entbehrlich sein könnte. Eine Leitungsaufnahme kann insofern in verschiedenen Ausführungen realisiert sein, von denen hier nur einige genannt sind.

Im Folgenden ist jedenfalls weiter bezugnehmend auf die Zeichnung ein Ausführungsbeispiel in Bezug auf die besonders bevorzugte Leitungsaufnahme 441 gezeigt und beschrieben, die mittels einer Leitungsführung 450 und einem Leitungshalter 440 realisiert ist.

Vorliegend weist die Halteeinrichtung 426 des Modulgehäuses 420 eine Leitungsführung 450 auf, die ausgebildet ist zum Aufnehmen einer oder mehrerer Fluidleitungen 332. Insgesamt weist auch das Modulgehäuse 420 eine Leitungsführung 450 für jeweils eine Fluidleitung 332 auf, beispielsweise in Form einer Druckluft-Leitungsführung 452 für die Druckluft-Fluidleitung 334 und einer Flüssigkeits-Leitungsführung 454 für die Flüssigkeits-Fluidleitung 336. In anderen Ausführungsformen, kann, wie hier gezeigt, eine gemeinsame Leitungsführung 450 vorgesehen werden für sämtliche, vorteilhaft parallel zueinander geführte, Fluidleitungen 332. Vorteilhaft kann die gemeinsame Leitungsführung

450 ausgebildet sein zum Aufnehmen weiterer Leitungen, insbesondere elektrische Steuerleitungen 904 und/oder Kameraleitungen 902, oder ein mehrere Leitungen umfassendes Leitungsbündel 920. Die Leitungsführung 450 ist vorliegend als Hohlkanal 456, d.h. hier in dem Aufnahmekörper 422, ausgebildet. Vorteilhaft ist der Hohlkanal 456 wie hier gezeigt zu einer Außenseite des Modulgehäuses 420 hin geöffnet, und mittels einer hier nicht dargestellten Abdeckung verschließbar.

Insbesondere kann eine derartige Abdeckung mittels Schrauben oder Schnappverschlüssen zum verschließenden Abdecken des Hohlkanals 456 auf dem Modulgehäuse 420 bzw. dem Aufnahmekörper 422 befestigt werden. In der Leitungsführung 450, insbesondere in dem Hohlkanal 456 sind für die Halteeinrichtung 426 eine Anzahl von Leitungshaltern 440 vorgesehen zur Befestigung, insbesondere zur wiederlösbaren Befestigung, der Fluidleitung 332. Vorteilhaft ist der Leitungshalter 440 als Leitungsklipp 442 ausgebildet, wie auch schematisch in Fig. 8A gezeigt. Ein Leitungsklipp 442 ist vorteilhaft als elastische Klammer ausgebildet, welche bei der Montage beim Anbringen des Leitungskörpers 333, 335, 337 in den Leitung 442 temporär verformt wird und - wenn der Leitungskörper 333, 335, 337 in dem Leitungsklipp 442 angeordnet ist - von diesem form- und/oder kraftschlüssig in Position gehalten wird. Der Leitungshalter 440 kann als Einfach-Leitungshalter 440.1, vorteilhaft als Einfach-Leitungsklipp 442.1, ausgebildet sein. In Ausführungsformen, in denen mehrere, vorteilhaft zwei, Fluidleitungen 332 in einer gemeinsamen Leitungsführung 450 geführt werden, ist der Leitungshalter 440 vorteilhaft als Mehrfach-Leitungshalter, insbesondere als Zweifach-Leitungshalter 440.2 und/oder Zweifach-Leitungsklipp 442.2, ausgebildet.

Die Halteeinrichtung 426 des Modulgehäuses 420 kann eine oder mehrere Stellmittelaufnahmen 428 zur Aufnahme eines Fluidstellmittels 356, insbesondere Ventils 360, aufweisen. Die Stellmittelaufnahme 428 ist vorteilhaft als Aussparung in dem Aufnahmekörper 422 ausgebildet. Vorteilhaft kann das Fluidstellmittels 356, wie hier gezeigt, als Schnellentlüftungsventil 430 ausgebildet sein. In anderen vorteilhaften Reinigungsanordnungen 500 kann alternativ oder zusätzlich ein Fluidstellmittel 356 als eine andere Form, insbesondere als ein 2/2-Wegeventil 364 oder als ein 3/2-Wegeventil 372, ausgebildet sein. Die Stellmittelaufnahme 428 weist vorteilhaft eine Halteverbindung 446 auf zum, insbesondere wiederlösbaren, Befestigen des Ventils 360. Die Halteverbindung 446, wie auch in Fig. 8C schematisch gezeigt, ist vorteilhaft als ein Befestigungsklipp 466 ausgebildet. Der Befestigungsklipp 466 weist vorteilhaft - analog zum Leitungsklipp 442 - eine oder mehrere elastische Klammern oder dergleichen elastischen Schenkel oder Schnapphaken auf. Vorteilhaft können ein Leitungshalter 440 und eine Halteverbindung 446 gemeinsam, vorteilhaft einstückig, als Kombinationshalter 448 ausgebildet sein. Insbesondere können ein Leitungsklipp 442 und ein Befestigungsklipp 466 zusammen, vorteilhaft einstückig, als Kombinationsklipp 449 ausgebildet sein. Insbesondere ist der Leitungshalter 440 oder die Halteverbindung 446 einstückig an den Aufnahmekörper 422 angeformt. Alternativ oder zusätzlich kann die Stellmittelaufnahme 428, wie auch in Fig. 8D schematisch gezeigt, eine Halteverbindung 446 in Form eines Haltebands 444 aufweisen. Ein Halteband 444 ist vorteilhaft als flexibles und/oder elastisches Band ausgeführt und ausgebildet zum Umgreifen des Fluidstellmittels 356 zwecks Befestigung in der Stellmittelaufnahme 428. Ein Halteband 444 kann vorteilhaft in der Art eines Kabelbinders ausgebildet sein und analog zu dem Verschließen eines Kabelbinders rastend formschlüssig in eine in der Stellmittelaufnahme 428 angeordnete Haltebandaufnahme 445. In analoger Weise kann - dies ist in Fig. 8B schematisch gezeigt,- ein Leitungshalter 440 als Leitungshalteband 447 zum Fixieren von einem oder mehreren Leitungskörpern 333 ausgebildet sein. Das Leitungshalteband 447 kann vorteilhaft in der Art eines Kabelbinders ausgebildet sein und analog zu dem Verschließen eines Kabelbinders rastend formschlüssig in eine Leitungshaltebandaufnahme 457.

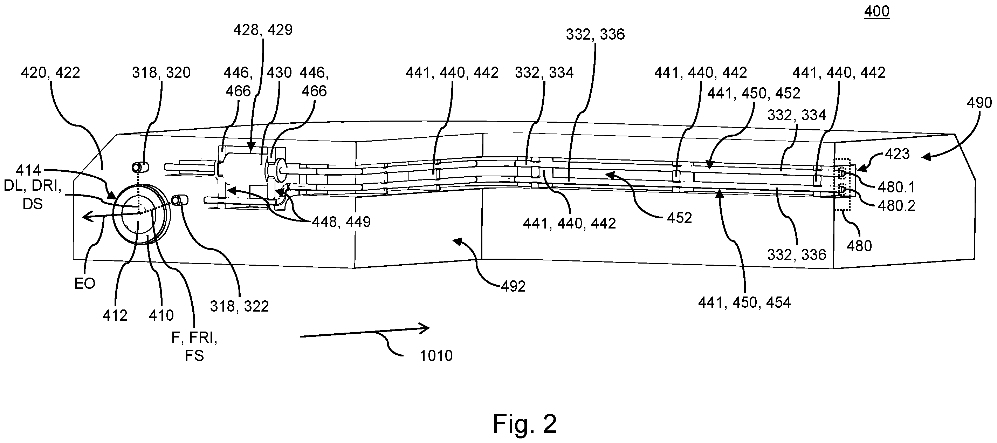

Fig. 2 zeigt die in Fig. 1 gezeigte Ausführungsform in einer perspektivischen Darstellung. In dieser Darstellung sind insbesondere zwei Seitenflächen, nämlich eine Fahrzeugseite 490 und eine Stufenseite 492 des Modulgehäuses 420 sichtbar. Die Fahrzeugseite 490 ist insbesondere zur Anbringung an ein Fahrzeug 1000, insbesondere an einer A-Säule 1008 eines Fahrzeugs 1000 ausgebildet und weist hierzu entsprechende, hier nicht weiter dargestellte, Anbringungsmittel auf. Zur besseren Übersicht ist in Fig. 2 eine Fahrzeugkörperachse 1010 eingezeichnet, welche die Ausrichtung eines Fahrzeugs 1000 kennzeichnet, an welches das Kameramodul 400 anbringbar ist. Durch diese Ausrichtung ergibt sich eine Orientierung der Kamera 410 und der Objektivoberfläche 412, mittels der eine optische Erfassung EO eines Außenbereichs 3000 des Fahrzeugs 1000, insbesondere eines rückwärtigen Außenbereichs 3002, möglich ist.

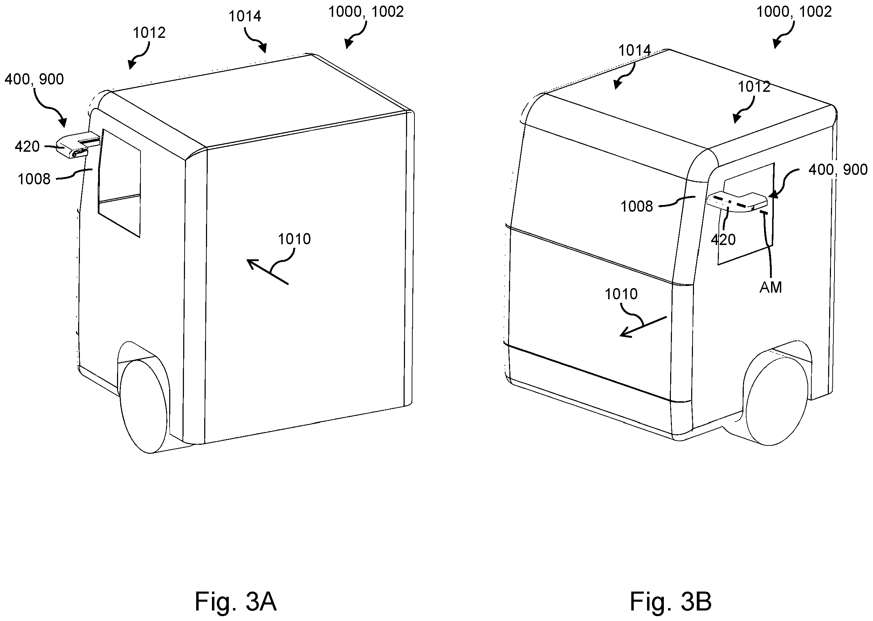

Fig. 3A und Fig. 3B zeigen schematisch ein als Nutzfahrzeug 1002 ausgebildetes Fahrzeug 1000, dass ein Spiegelersatzsystem 900 mit einem Kameramodul 400 aufweist. Das Kameramodul 400 ist vorliegend auf einer Fahrerseite 1012, hier der - in Richtung der Fahrzeugkörperachse 1010 betrachtet - linken Seite des Fahrzeugs 1000 angeordnet. Besonders vorteilhaft kann das Fahrzeug alternativ oder zusätzlich auf einer gegenüberliegenden Beifahrerseite 1012, hier der rechten Seite des Fahrzeugs 1000, ebenfalls ein Kameramodul 400 aufweisen. Ein Kameramodul 400 auf der Beifahrerseite 1012 ist besonders vorteilhaft, da es Unfälle mit auf der Beifahrerseite 1012 des Fahrzeugs befindlichen Verkehrsteilnehmern, insbesondere Fahrradfahrern, insbesondere beim Abbiegen des Fahrzeugs 1000, verhindern kann. Des Weiteren ist für einen Fahrer des Fahrzeugs 1000 ein Reinigen der Objektivoberfläche 412 eines auf der vom Fahrersitz gegenüberliegenden Seite angeordneten Kameramoduls 400 aufgrund der Entfernung nur unter erhöhtem Aufwand möglich, weshalb eine Reinigungsanordnung 500 in einem Modulgehäuse 420 gemäß der Erfindung besonders vorteilhaft ist. Bei Fahrzeugen 1000 mit einer entsprechend seitenverkehrten Anordnung des Fahrersitzes, insbesondere in Ländern mit Linksverkehr, gelten diese Vorteile für eine entsprechend seitenverkehrte Anordnung analog.

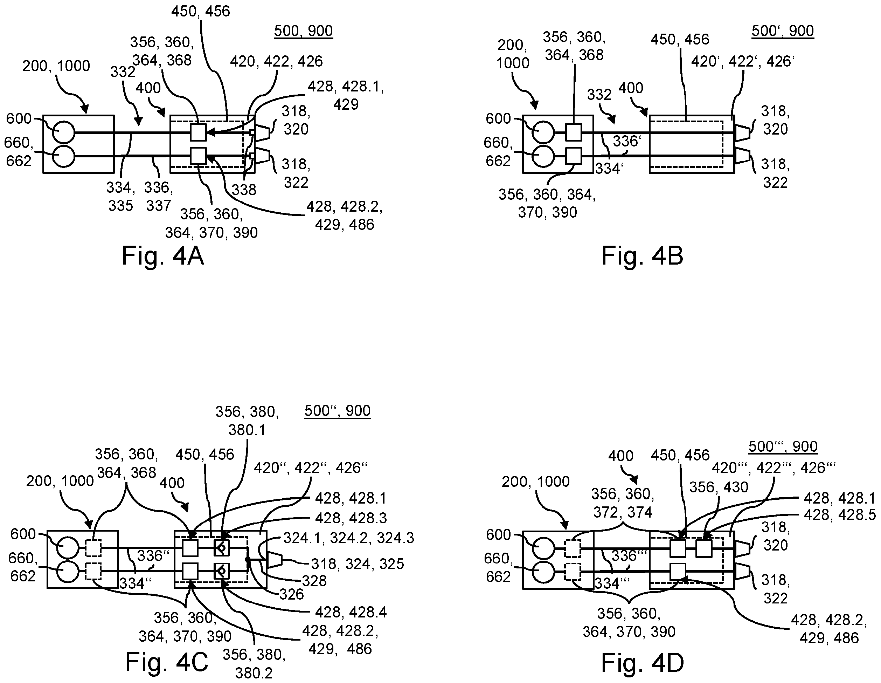

Fig. 4A, Fig. 4B, Fig. 4C und Fig. 4D zeigen beispielhaft unterschiedliche Möglichkeiten zu Anordnung von Elementen einer Reinigungsanordnung 500 für ein Spiegelersatzsystem 900 und entsprechend angepasste Modulgehäuse 420 im Rahmen der Erfindung.

In Fig. 4A Ist ein Modulgehäuse 420 eines Kameramoduls 400 mit einem Aufnahmekörper 422 mit einer Halteeinrichtung 426 gezeigt, die eine Leitungsaufnahme 450 in Form eines Hohlkanals 456 aufweist. Die Leitungsaufnahme 450 ist als gemeinsame Leitungsaufnahme 450 für eine erste Druckluft-Fluidleitung 334 und eine zweite Flüssigkeits-Fluidleitung 336 ausgebildet. Die Druckluft-Fluidleitung 334 ist fluidführend mit einer Druckluftquelle 600, insbesondere von einer Druckluftversorgungsanlage, verbunden. Die Flüssigkeits-Fluidleitung 336 ist fluidführend mit einer Flüssigkeitsquelle 660, beispielsweise einem Wischwassertank 662, verbunden. Die Flüssigkeitsquelle 660 kann eine Pumpe 390 aufweisen zum Fördern von Reinigungsflüssigkeit.

Die Halteeinrichtung 426 des Modulgehäuses 420 kann, insbesondere in dem Aufnahmekörper 422, kann eine oder mehrere Stellmittelaufnahmen 428, insbesondere Ventilaufnahmen 429 oder Pumpenaufnahmen 486, aufweisen. Vorliegend weist der Aufnahmekörper 422 eine erste Stellmittelaufnahme 428.1 zur Aufnahme eines Fluidstellmittels 356, hier in Form eines Ventils 360, in der ersten Druckluft-Fluidleitung 334 auf. Das in dieser Stellmittelaufnahme 428 aufgenommene Ventil 360 kann insbesondere als 2/2-Wege Ventil 364, insbesondere als pneumatisches 2/2-Wege Ventil 368, ausgebildet sein. Mittels eines 2/2-Wegeventils 364 kann die Druckluft- Fluidleitung 334 selektiv geöffnet und gesperrt werden, um auf diese Weise Druckluft DL an der Reinigungsdüse 318, hier an der Druckluft-Reinigungsdüse 320, bereitzustellen.

Der Aufnahmekörper 422 weist vorliegend eine weitere, zweite Stellmittelaufnahme 428.2 zur Aufnahme eines als Ventil 360 ausgebildeten Fluidstellmittels 356 in der Flüssigkeits-Fluidleitung 336 auf. Das in dieser zweiten Stellmittelaufnahme 428.2 aufgenommene Ventil 360 kann insbesondere als ein 2/2-Wegeventil 364, insbesondere ein hydraulisches 2/2-Wegeventil 370 ausgebildet sein. Alternativ oder zusätzlich kann der Aufnahmekörper 422 eine als Pumpenaufnahme 486 ausgebildete Stellmittelaufnahme 428 aufweisen, die ausgebildet ist zur Aufnahme eines als Pumpe 390 ausgebildeten Fluidstellmittels 356. Die Pumpe 390 kann insbesondere als elektrische Pumpe 390 ausgebildet sein. Eine derartige Pumpe 390 ist insbesondere vorteilhaft bei Ausführungsformen, in denen die Flüssigkeitsquelle 660 drucklos ausgebildet ist, beispielsweise als Wischwassertank 662. Eine Pumpe 390 ist ausgebildet zum Fördern von Reinigungsflüssigkeit. Durch ein elektrisches ansteuern der Pumpe kann Selektivreinigungsflüssigkeit F an der Reinigungsdüse 318, hier an der Flüssigkeits-Reinigungsdüse 322, bereitgestellt werden. Jede Reinigungsdüse 318 kann vorteilhaft mittels einer Steckverbindung 338 an eine Fluidleitung 332 fluidführend angeschlossen werden.

In Fig. 4B ist eine weitere Reinigungsanordnung 500' mit einem weiteren Kameramodul 400' und einem weiteren Aufnahmekörper 422' mit einer Halteeinrichtung 426' dargestellt. Im Unterschied zu Fig. 4A weist der weitere Aufnahmekörper 422' lediglich die Leitungsaufnahme 450, jedoch keine Stellmittelaufnahmen 428 auf, da die Fluidstellmittel 356, insbesondere Ventile 360 oder etwaige Pumpen 390, nicht in dem weiteren Modulgehäuse 420' bzw. dem weiteren Aufnahmekörper 422', sondern fahrzeugseitig im Fahrzeug 1000, gegebenenfalls in einem Fluidversorgungsmodul 200, angeordnet sind.

In Fig. 4C ist eine noch weitere vorteilhafte Reinigungsanordnung 500" mit einem entsprechend ausgebildeten, noch weiteren Aufnahmekörper 422" eines noch weiteren Modulgehäuses 420" mit einer noch weiteren Halteeinrichtung 426" gezeigt. Der noch weitere Aufnahmekörper 422" weist weitere Stellmittelaufnahmen 428.3, 428.4, jeweils zur Aufnahme eines als Rückschlagventil 380 ausgebildeten Fluidstellmittels 356, auf. Vorliegend weist die dritte Stellmittelaufnahme 428.3 ein erstes Rückschlagventil 380.1, und eine vierte Stellmittelaufnahme 428.4 ein zweites Rückschlagventil 380.2, auf. Das erste Rückschlagventil 380.1 ist in der Druckluft-Fluidleitung 334, das zweite Rückschlagventil 380.2 ist in der Flüssigkeits-Fluidleitung 336 angeordnet. Entsprechend sind die dritte Stellmittelaufnahme 428.3 und die vierte Stellmittelaufnahme 428.4 in dem Aufnahmekörper 422 angeordnet.

Das Vorsehen von einem Rückschlagventil 380, insbesondere von einem ersten und zweiten Rückschlagventil 380.1, 380.2, ermöglicht vorteilhaft in verbesserter Weise die Verwendung einer Kombinationsdüse 324 als Reinigungsdüse 318. Ein Rückschlagventil 380 in einer ersten Fluidleitung 332 verhindert, dass wenn ein Reinigungsfluid RF durch eine weitere, mit der Kombinationsdüse 324 verbundene, Fluidleitung 332 geführt wird, dieses Reinigungsfluid RF in die erste Fluidleitung 320 gelangt. Eine Kombinationsdüse 324 ist bevorzugt aus einem Düsenkörper 325 gebildet. Eine Kombinationsdüse 324 kann einen Kombinationsanschluss 324.1 aufweisen zum Anschließen einer Kombinationsleitung 328. Vorliegend ist die Kombinationsleitung 328 über die Leitungszusammenführung 326 fluidführend mit der Druckluft-Fluidleitung 334 und der Flüssigkeits-Fluidleitung 336 verbunden. In alternativen Reinigungsanordnungen 500 kann eine Kombinationsdüse 324 separate Anschlüsse aufweisen, insbesondere einen Druckluft-Reinigungsanschluss 324.2, der ausgebildet ist zum fluidführenden Anschließen der Druckluft-Fluidleitung 334, und einen Flüssigkeits-Reinigungsanschluss 324.2, der ausgebildet ist zum fluidführenden Anschließen der Flüssigkeits-Fluidleitung 336. In derartigen Ausbildungen der Kombinationsdüse 324 erfolgt bevorzugt eine Zusammenführung beider Leitungen innerhalb des Düsenkörpers 325.

Der noch weitere Aufnahmekörper 422" kann optional weitere Stellmittelaufnahmen 428 zur Aufnahme eines Fluidstellmittels 356, beispielsweise Ventilaufnahmen 429 wie hier gezeigt die erste Stellmittelaufnahme 428.1 und die zweite Stellmittelaufnahme 428.2, oder Pumpenaufnahmen 486, zum Aufnehmen einer Pumpe 390, aufweisen. Alternativ können jedoch zum Schalten oder Fördern des Reinigungsfluids RF benötigte Fluidstellmittel 356 auch fahrzeugseitig im Fahrzeug 1000 und/oder in einem Fluidversorgungsmodul 200, angeordnet sein, wie hier gestrichelt angedeutet.

Fig. 4D zeigt ein noch weiteres Modulgehäuse 420‴ mit einem noch weiteren Aufnahmekörper 422‴ mit einer noch weiteren Halteeinrichtung 426‴ für eine noch weitere Reinigungsanordnung 500'", mit einer weiteren Stellmittelaufnahme 428 in Form einer fünften Stellmittelaufnahme 428.5 zur Aufnahme eines als Schnellentlüftungsventil 430 ausgebildeten Fluidstellmittels 356. Das Schnellentlüftungsventil 430 ist bevorzugt in der Druckluft-Fluidleitung 334 angeordnet.

Bevorzugt wird das Schnellentlüftungsventil 430 mit einem als 3/2-Wegeventil 372, insbesondere als pneumatisches 3/2-Wegeventil 374, ausgebildeten Ventil 360 kombiniert, um das Schnellentlüftungsventil 430 gemäß seiner nachfolgend beschriebenen Funktionsweise zu be- und entlüften.

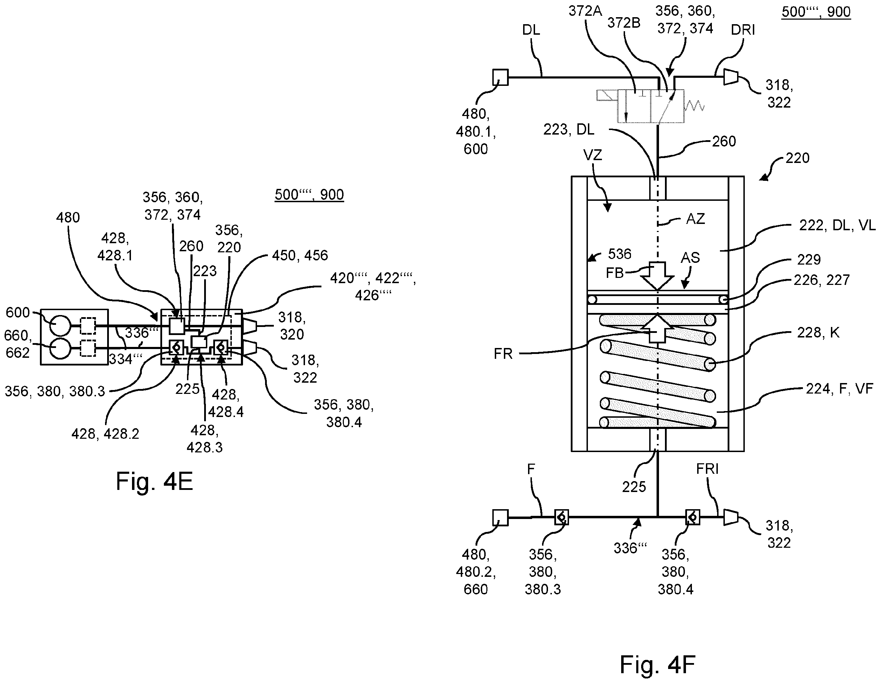

Fig. 4E zeigt ein noch weiteres Modulgehäuse 420ʺʺ mit einem noch weiteren Aufnahmekörper 422ʺʺ mit einer noch weiteren Halteeinrichtung 426ʺʺ für eine noch weitere Reinigungsanordnung 500"". Die noch weitere Reinigungsanordnung 500ʺʺ weist in einer Stellmittelaufnahme 428, insbesondere einer dritten Stellmittelaufnahme 428.3, einen Druckzylinder 220 und einer weiteren Stellmittelaufnahme 428, insbesondere einer ersten Stellmittelaufnahme 428.1, ein als 3/2-Wegeventil 372 ausgebildetes Fluidstellmittel 356 auf. Der Druckzylinder 220 und das 3/2-Wegeventil 372 sind über eine Verbindungsfluidleitung 260 pneumatisch miteinander verbunden. Das 3/2-Wegeventil 372 ist insbesondere als pneumatisches 3/2-Wegeventil 374 ausgebildet. Weiterhin ist, in der Leitungsaufnahme für die Flüssigkeits-Fluidleitung 334ʺʺ angeordnet, eine zweite und dritte Stellmittelaufnahme 428.2, 428.3 vorgesehen, in der jeweils ein Rückschlagventil 380, nämlich ein drittes Rückschlagventil 380.3 und ein viertes Rückschlagventil 380.4 angeordnet sind.

Fig. 4F zeigt im Detail ein einzelnes, als Druckzylinder 220 ausgebildetes Fluidstellmittel 356 in einer seitlichen Querschnittsansicht. Der Druckzylinder 220 weist ein Trennmittel 226 in Form eines Zylinderstempels 227 auf, welches innerhalb des Zylindervolumens VZ des Druckzylinders 220, axial entlang der Zylinderachse AZ bewegbar und druckdicht an einer Innenwandung 536 des Druckzylinders 220 anliegend, angeordnet ist. Der Zylinderstempel 227 teilt somit das Zylindervolumen VZ in veränderbarer Weise in eine Druckluft DL aufnehmende Luftkammer 222 mit einem Luftkammervolumen VL und eine Reinigungsflüssigkeit F aufnehmende Flüssigkeitskammer 224 mit einem Flüssigkeitskammervolumen VF. Durch ein - sich über den Umfang des Zylinderstempels 227 erstreckendes - Anliegen des Zylinderstempels 227 an der Innenwandung 536 des Druckzylinders 220 wird die Luftkammer 222 fluiddicht von der Flüssigkeitskammer 224 getrennt. Über einen Luftkammer-Anschluss 223 kann die Luftkammer 222 einerseits mit Druckluft DL- zur Erzeugung einer auf den Zylinderstempel 227 wirkenden Beaufschlagungskraft FB - beaufschlagt werden und andererseits zwecks Bereitstellung eines Druckluft-Reinigungsimpuls DRI durch das sich über die Rückstellkraft zurückbewegende Trennmittel 226 Druckluft DL als Druckluft-Reinigungsimpuls DRI abgegeben werden. Der Luftdruck des Druckluft-Reinigungsimpulses DRI ergibt sich dabei insbesondere durch die Rückstellkraft multipliziert mit einer Stempelfläche AS des Zylinderstempels 227. Über einen Flüssigkeitskammer-Anschluss 225 kann die Flüssigkeitskammer 224 Reinigungsflüssigkeit F ansaugen und zwecks Bereitstellung eines Flüssigkeits-Reinigungsimpulses FRI abgeben.

Optional kann der Zylinderstempel 227 zur besseren Abdichtung der Luftkammer 222 von der Flüssigkeitskammer 224 einen Dichtring 229, insbesondere aus Kunststoff und/oder Gummi, aufweisen. Der Zylinderstempel 227 wird von einer Rückstellfeder 228 in dem Zylindervolumen VZ des Druckzylinders 220 gehalten, sodass bei einer Auslenkung, insbesondere durch eine Beaufschlagung des Luftkammeranschlusses 223 mit Luftdruck hervorgerufen, eine Rückstellkraft FR erzeugt wird.

Der Druckzylinder 220 kann ein Zylindervolumen VZ von zwischen 5 ml und 80 ml, bevorzugt zwischen 10 ml und 40 ml, besonders bevorzugt zwischen 10 und 20 ml aufweisen.

Wenn sich das 3/2-Wegeventil 372 in einer Belüftungsstellung 372A befindet. wird ein von der Druckluftquelle 600 bereitgestellter Luftdruck an den Luftkammer-Anschluss 223 weitergeleitet, was eine Expansion der Luftkammer 222 und ein Bereitstellen eines Flüssigkeits-Reinigungsimpulses FRI am Flüssigkeitskammer-Anschluss 225 und somit an der Flüssigkeits-Reinigungsdüse 322 (oder einer hier nicht dargestellten Kombinationsdüse 324) zur Folge hat. Durch das dritte Rückschlagventil 380.3 wird verhindert, dass der Flüssigkeits-Reinigungsimpuls FRI zurück in Richtung des Leitungsanschlusses bzw. der Flüssigkeitsquelle 660 strömen kann.

In einer Entlüftungsstellung 372B des 3/2-Wegeventils 372 ist der Luftkammer-Anschluss 223 mit der Druckluft-Reinigungsdüse 320 (oder einer hier nicht dargestellten Kombinationsdüse 324) pneumatisch verbunden, wodurch der Luftkammer-Anschluss 223 entlüftet wird und sich das Trennmittel 226 durch die Rückstellkraft FR zurückbewegt. Dadurch wird sowohl das Luftkammervolumens VL der Luftkammer 222 verkleinert, als auch das Flüssigkeitskammervolumen VF der Flüssigkeitskammer 224 vergrößert. Durch das Zurückbewegen des Trennmittels 226 entsteht ein Unterdruck am Flüssigkeitskammer-Anschluss 225. Aufgrund des vierten Rückschlagventils 380.4 wirkt der Unterdruck nur in Richtung der Flüssigkeitsquelle 660 (und nicht an der Reinigungsdüse 318, hier der Flüssigkeits-Reinigungsdüse 322), wodurch neue Reinigungsflüssigkeit F von der Flüssigkeitsquelle 660 in die Flüssigkeitskammer 224 gesaugt wird, insbesondere vorteilhaft ohne dass eine Pumpe oder dergleichen Fördereinrichtung oder ein hydraulisches Schaltventil benötigt wird.

Die in Fig. 4A, Fig. 4B, Fig. 4C, Fig. 4D, Fig. 4E bzw. Fig. 4F gezeigten Ausführungsformen können beliebig kombiniert werden, insbesondere was die Anordnung von Stellmittelaufnahmen 428, insbesondere Ventilaufnahmen 429 oder Pumpenaufnahmen 486, für einzelne Fluidleitungen 332 in einem Aufnahmekörper 422 betrifft. Beispielsweise kann der in Fig. 4A gezeigte Druckluft-Fluidleitung 334 mit der in Fig. 4B gezeigten Flüssigkeits-Fluidleitung 336' kombiniert werden, oder umgekehrt die in Fig. 4A gezeigte Flüssigkeits-Fluidleitung 336 mit der in Fig. 4B gezeigten Druckluft-Fluidleitung 334'. Ebenso kann eine in Fig. 4C gezeigte Kombinationsdüse 324 und/oder Leitungszusammenführung 326 mit sämtlichen anderen gezeigten Ausführungsformen kombiniert werden. Ebenso kann das in Fig. 4D gezeigte Schnellentlüftungsventil 430, insbesondere bevorzugt zusammen mit einem 3/2-Wegeventil 372, mit sämtlichen anderen gezeigten Ausführungsformen kombiniert werden. Auch kann beispielsweise das in Fig. 4D gezeigte Schnellentlüftungsventil 430 ohne weitere Ventile 360 in dem Modulgehäuse 420 bzw. dem Aufnahmekörper 422 angeordnet sein, wie in der in Fig. 1 und Fig. 2 gezeigten Ausführungsform dargestellt. In diesem Falle erfolgt ein Schalten und/oder Fördern des Reinigungsfluids RF über im Fahrzeug 1000 angeordnete Ventile.

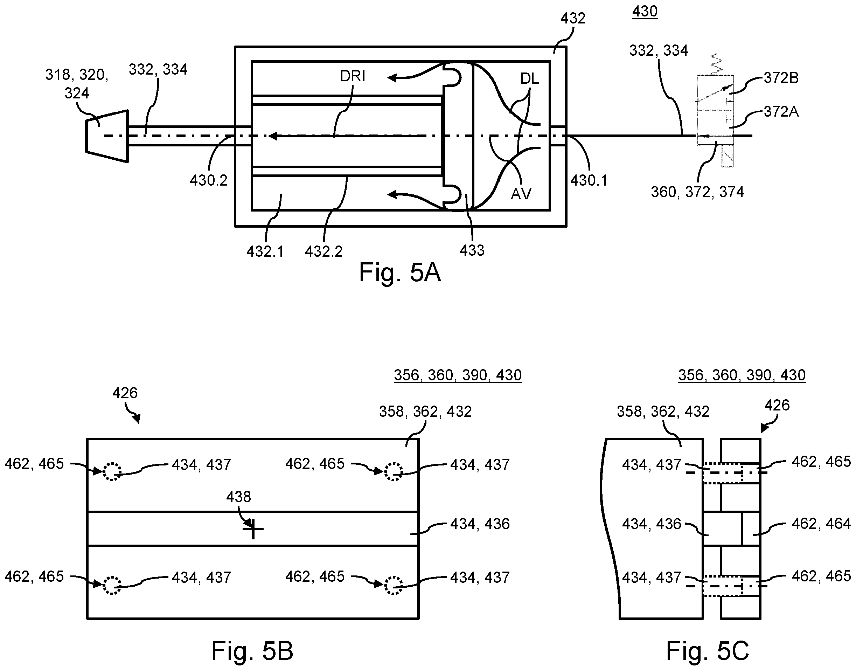

Fig. 5A zeigt schematisch in einem Querschnitt ein Schnellentlüftungsventil 430. Das Schnellentlüftungsventil 430 ist ausgebildet zum Annehmen von Druckluft DL über die Druckluft-Fluidleitung 334 und zum Abgeben der Druckluft DL in Form eines Druckluft-Reinigungsimpulses DRI, welcher der Reinigungsdüse 318, insbesondere einer Druckluft-Reinigungsdüse 320 oder einer Kombinationsdüse 324, bereitgestellt wird. Innerhalb eines, bevorzugt zylindrisch aufgebauten, Ventilgehäuses 432 ist ein, entlang einer Ventilachse AV bewegbarer, Ventilstempel 433 angeordnet. Indem ein Ventil 360, insbesondere ein 3/2-Wegeventil 372, in eine Belüftungsstellung 372A geschaltet wird, wird Druckluft DL über einen ersten Ventilanschluss 430.1 in das Ventilgehäuse 432 geleitet. Die Druckluft DL kann, wie hier mit den Pfeilen dargestellt, an dem Ventilstempel 433 vorbei in einen Laderaum 432.1 strömen. Der Laderaum 432.1 ist ringförmig zwischen dem Ventilgehäuse 432 und einem innerhalb des Ventilgehäuses angeordneten, rohrförmigen Ringsteg 432.2 gebildet. Durch die eintretende Druckluft DL wird der Ventilstempel 433 stirnseitig gegen den Ringsteg 432.2 gedrückt. Bei einem Entlüften durch das Ventil 360, insbesondere einem Schalten des 3/2-Wegeventils 372 in eine Entlüftungsstellung 372B, fällt der Druck der Druckluft DL am ersten Ventilanschluss 430.1 plötzlich ab, wodurch die in dem Laderaum 432.1 gehaltene Druckluft impulsartig in Form eines Druckluft-Reinigungsimpulse durch den Ringsteg 432.2 und weiter durch einen zweiten Ventilanschluss 430.2 zur Reinigungsdüse 318 entweicht. Der Vorgang kann wiederholt werden, indem das Ventil 360 wieder in seine Belüftungsstellung geschaltet wird.

Fig. 5B und Fig. 5C zeigen ein Stellmittelgehäuse 358 eines Fluidstellmittels 356, insbesondere ein Ventilgehäuse 362 eines Ventils 360 oder ein Pumpengehäuse 392 einer Pumpe 390, mit beispielhaft gezeigten Positioniermerkmalen 434. Fig. 5B zeigt dabei eine Vorderansicht, Fig. 5C eine ausschnittsweise Seitenansicht. Das Stellmittelgehäuse 358 weist bevorzugt Positioniermerkmale 434 auf, die jeweils ausgebildet sind, mit einem korrespondierenden Aufnahmemerkmal 462 in Eingriff gebracht zu werden zum Befestigen des Fluidstellmittels 356 in einer definierten Stellmittelposition 438. Ein Positioniermerkmal 434 kann beispielsweise als eine Positionierleiste 436 ausgebildet sein, die mit einem korrespondierenden, als Aufnahmenut 464 ausgebildeten, Aufnahmemerkmal 462 in Eingriff gebracht werden kann. Ein Positioniermerkmal 434 kann auch, wie hier gestrichelt dargestellt, als ein Positionierstift 437 ausgebildet sein, der mit einem korrespondierenden, als Aufnahmebohrung 465 ausgebildeten, Aufnahmemerkmal 462 in Eingriff gebracht werden kann. Ein Aufnahmemerkmal 462 kann alternativ oder zusätzlich zu einer Halteverbindung 446 in einem Modulgehäuse 420 vorgesehen werden.

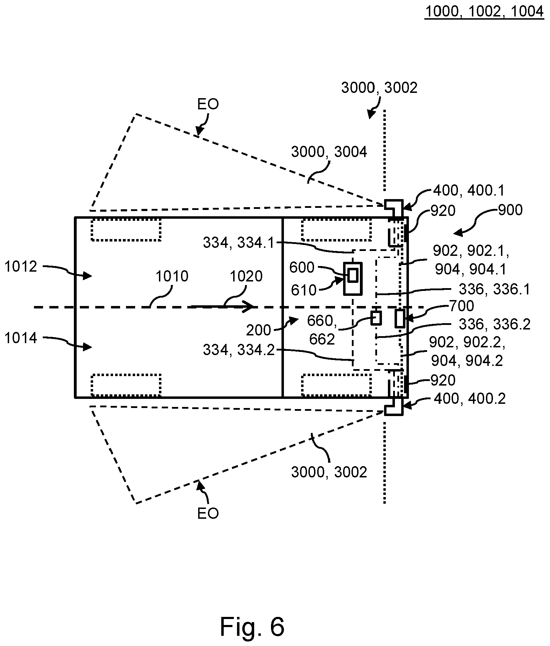

Fig. 6 zeigt in einer schematischen Draufsicht ein Fahrzeug 1000, insbesondere ein Nutzfahrzeug 1002 oder einen PKW 1004, mit einem Spiegelersatzsystem 900. Das Spiegelersatzsystem 900 weist zwei Kameramodule 400.1, 400.2 auf, welche jeweils ein Modulgehäuse 420 mit einem Aufnahmekörper 422 aufweisen. Das erste Kameramodul 400.1 ist auf der Fahrerseite 1012, das zweite Kameramodul 400.2 auf der Beifahrerseite 1014 des Fahrzeugs 1000 angeordnet.

Das Kameramodul 400 weist eine hier nicht näher dargestellte Kamera 410 auf, welche über eine Kameraleitung 902 mit einer elektronischen Steuereinheit 700 signalführend verbunden ist. Die Kamera 410 ist ausgebildet zur optischen Erfassung EO eines Außenbereichs 3000, insbesondere eines rückwärtigen Außenbereichs 3004. Das erste Kameramodul 400.1 ist dabei angeordnet zur optischen Erfassung EO eines auf der Fahrerseite 1012 angeordneten, ersten rückwärtigen Außenbereichs 3000.1. Das zweite Kameramodul 400.2 ist angeordnet zur optischen Erfassung EO eines auf der Beifahrerseite 1014 angeordneten, zweiten rückwärtigen Außenbereichs 3000.2. "Rückwärtig" bedeutet dabei insbesondere in Richtung der Fahrzeugkörperachse 1010 entgegen einer Vorwärts-Fahrtrichtung 1020 des Fahrzeugs 1000 gerichtet. Die elektronische Steuereinheit 700 ist wiederum mit einem Wiedergabegerät 910, insbesondere einem Bildschirm 912, zur Darstellung des mit der Kamera 410 aufgenommenen Bildes signalführend verbunden. Vorliegend ist das erste Kameramodul 400.1 über eine erste Kameraleitung 902.1 mit der elektronischen Steuereinheit 700 verbunden.

Das Kameramodul 400 weist weiterhin eine Reinigungsanordnung 500 auf, die hier nicht näher dargestellt ist. Die Reinigungsanordnung 500 ist mittels einer Druckluft-Fluidleitung 334 mit einer Druckluftquelle 600 einer Druckluftversorgungsanlage 610 pneumatisch verbunden. Vorliegend ist die Reinigungsanordnung 500 des ersten Kameramoduls 400.1 über eine erste Druckluft-Fluidleitung 334.1 mit der Druckluftquelle 600 fluidführend verbunden. Die Reinigungsanordnung 500 ist mittels einer Flüssigkeits-Fluidleitung 336 mit einer Flüssigkeitsquelle 660 fluidführend verbunden. Vorliegend ist die Reinigungsanordnung 500 des ersten Kameramoduls 400.1 mittels einer ersten Flüssigkeits-Fluidleitung 336.1 mit der Flüssigkeitsquelle 660 verbunden. In dem Fall, dass ein Kameramodul 400, insbesondere das erste und/oder zweite Kameramodul 400.1, 400.2, ein oder mehrere Fluidstellmittel 356 zum Schalten oder Fördern eines Reinigungsfluids RF, insbesondere Ventile 360 oder Pumpen 390, aufweist, weist das Spiegelersatzsystem 900 weiter eine oder mehrere elektrische Steuerleitungen 904 auf zum selektiven, elektrischen Schalten dieser Fluidstellmittel 356 über die elektronische Steuereinheit 700 oder eine weitere Steuereinheit. Vorliegend ist das erste Kameramodul 400.1 über eine erste Ventilsteuer 904.1 Signal führend mit der elektronischen Steuereinheit 700 verbunden.

Die oben für das erste Kameramodul 400.1 gemachten Ausführungen gelten analog mit entsprechender Nummerierung für das zweite Kameramodul 400.2.

Vorteilhaft können mehrere, insbesondere sämtliche der hier beschriebenen Leitungen 334, 336, 902, 904 zumindest über Teile der zum Kameramodul 400 führenden Strecke als Leitungsbündel 920 durch das Fahrzeug 1000 und/oder das Modulgehäuse 420 geführt werden. Ein derartiges Leitungsbündel 920 kann insbesondere einen Schlauch oder Netz oder dergleichen längliches, insbesondere flexibles, Mittel zum Bündeln der Leitungen 334, 336, 902, 904 umfassen. Mittels eines Leitungsbündels 920 kann vorteilhaft der Einbau und/oder die Reparatur eines Kameramoduls 400 vereinfacht werden. Optional kann das Fahrzeug ein Fluidversorgungsmodul 200 aufweisen, das ein Druckluftquelle 600 und/oder eine Flüssigkeitsquelle 660 umfasst oder fluidführend mit diesen verbunden ist, und zur Bereitstellung mindestens eines Reinigungsfluids RF an die Reinigungsanordnung ausgebildet ist. Das Modulgehäuse 420 mit dem Aufnahmekörper 422 und der Halteeinrichtung 426 erlaubt vorteilhaft eine flexible Konfiguration von Reinigungsanordnungen 500. Durch das Vorsehen von Stellmittelaufnahmen 428 und/oder Leitungsführungen 450 und/oder Leitungshaltern 440 in standardmäßigen Anordnungen können vorteilhaft unterschiedliche Reinigungsanordnungen 500 realisiert werden, wobei das Modulgehäuse 420 nicht oder nur geringfügig angepasst werden muss. Insbesondere weisen dafür Fluidstellmittel 356 identische oder ähnliche Außenmaße auf, sodass eine Austauschbarkeit unterschiedlicher Fluidstellmittel 356 in einer Stellmittelaufnahme 428 möglich ist.

### Bezugszeichenliste (Teil der Beschreibung)

- 220: Druckzylinder
- 222: Luftkammer
- 223: Luftkammer-Anschluss
- 224: Flüssigkeitskammer
- 225: Flüssigkeitskammer-Anschluss
- 226: Trennmittel
- 227: Zylinderstempel
- 228: Rückstellfeder
- 229: Dichtring
- 260: Verbindungsfluidleitung
- 318: Reinigungsdüse
- 320: Druckluft-Reinigungsdüse
- 322: Flüssigkeits-Reinigungsdüse
- 324: Kombinationsdüse
- 324.1: Kombinationsanschluss
- 324.2: Druckluft-Reinigungsanschluss
- 324.3: Flüssigkeits-Reinigungsanschluss
- 325: Düsenkörper
- 326: Leitungszusammenführung
- 328: Kombinationsleitung
- 332: Fluidleitung
- 333: Leitungskörper
- 334: Druckluft-Fluidleitung
- 335: Druckluft-Leitungskörper
- 336: Flüssigkeits-Fluidleitung
- 337: Flüssigkeits-Leitungskörper
- 338: Steckverbindung
- 340: Düsenaufnahme
- 342: Druckluft-Düsenaufnahme
- 344: Flüssigkeits-Düsenaufnahme
- 356: Fluidstellmittel
- 358: Stellmittelgehäuse
- 360: Ventil
- 362: Ventilgehäuse
- 364: 2/2-Wegeventil
- 366: 2/2-Wege-Magnetventil
- 368: pneumatisches 2/2-Wegeventil
- 370: hydraulisches 2/2-Wegeventil
- 372: 3/2-Wegeventil
- 372A: Belüftungsstellung des 3/2-Wegeventils
- 372B: Entlüftungsstellung des 3/2-Wegeventils
- 374: pneumatisches 3/2-Wegeventil
- 380: Rückschlagventil
- 380.1, 380.2, 380.3, 380.4: erstes bis viertes Rückschlagventil
- 390: Pumpe
- 392: Pumpengehäuse
- 410: Kamera
- 412: Objektivoberfläche
- 414: Sichtöffnung
- 420: Modulgehäuse
- 421: Gehäusewandung
- 422: Aufnahmekörper
- 423: Aufnahmeöffnung
- 424: Kamerahalterung
- 426: Halteeinrichtung
- 428: Stellmittelaufnahme
- 429: Ventilaufnahme
- 430: Schnellentlüftungsventil
- 430.1: erster Ventilanschluss
- 430.2: zweiter Ventilanschluss
- 432: Schnellentlüftungsventilgehäuse
- 432.1: Laderaum
- 432.2: Ringsteg
- 433: Ventilstempel
- 434: Positioniermerkmal
- 436: Positionierstecker
- 437: Positionierstift
- 438: Stellmittelposition
- 440: Leitungshalter
- 440.1: Einfach-Leitungshalter
- 440.2: Zweifach-Leitungshalter
- 441: Leitungsaufnahme
- 442: Leitungsklipp
- 442.1: Einfach-Leitungsklipp
- 442.2: Zweifach-Leitungsklipp
- 444: Halteband
- 445: Haltebandaufnahme
- 446: Halteverbindung
- 447: Leitungshalteband
- 448: Kombinationshalter
- 449: Kombinationsklipp
- 450: Leitungsführung
- 452: Druckluft-Leitungsführung
- 454: Flüssigkeits-Leitungsführung
- 456: Hohlkanal
- 457: Leitungshaltebandaufnahme
- 462: Aufnahmemerkmal
- 464: Aufnahmenut
- 465: Aufnahmebohrung
- 466: Befestigungsklipp
- 480: Leitungsanschluss
- 482: Steckanschluss
- 484: Klemmdurchführung
- 486: Pumpenaufnahme
- 488: Schraubanschluss
- 488A: Schottverschraubung
- 488B: Schlauchtülle
- 488C: Steckverschraubung
- 489: Gewinde
- 490: Fahrzeugseite des Modulgehäuses
- 492: Stufenseite des Modulgehäuses
- 494: Mutter
- 495: Einsatzgewinde
- 500: Reinigungsanordnung
- 536: Innenwandung
- 600: Druckluftquelle
- 610: Druckluftversorgungsanlage
- 660: Flüssigkeitsquelle
- 662: Wischwassertank
- 700: Elektronische Steuereinheit
- 900: Spiegelersatzsystem
- 902: Kameraleitung
- 902.1, 902.2: erste, zweite Kameraleitung
- 904: Steuerleitung, elektrische Steuerleitung
- 904.1 ,904.2: erste, zweite Steuerleitung
- 910: Wiedergabegerät
- 912: Bildschirm
- 920: Leitungsbündel
- 1000: Fahrzeug
- 1002: Nutzfahrzeug
- 1004: PKW
- 1008: A-Säule
- 1010: Fahrzeugkörperachse
- 1012: Fahrerseite des Fahrzeugs
- 1014: Beifahrerseite des Fahrzeugs
- 1020: Vorwärts-Fahrtrichtung des Fahrzeugs
- 3000: Außenbereich
- 3004: rückwärtiger Außenbereich

- AM: Modulachse
- AS: Stempelfläche
- AV: Ventilachse des Schnellentlüftungsventils
- DL: Druckluft
- DRI: Druckluft-Reinigungsimpuls
- DS: Druckluftströmung
- EO: optische Erfassung
- F: Flüssigkeit
- FB: Beaufschlagungskraft
- FR: Rückstellkraft
- FRI: Flüssigkeits-Reinigungsimpuls
- FS: Flüssigkeitsströmung
- K: Federkonstante
- RF: Reinigungsfluid
- VF: Flüssigkeitskammervolumen
- VL: Luftkammervolumen
- VZ: Zylindervolumen

## Patentansprüche

1. Spiegelersatzsystem (900) zur Anbringung an ein Fahrzeug (1000), aufweisend:
- ein Modulgehäuse (420), und
- eine Reinigungsanordnung (500) umfassend mindestens eine Reinigungsdüse (318, 320, 322, 324), insbesondere eine Druckluft-Reinigungsdüse (320), eine Flüssigkeits-Reinigungsdüse (322) oder eine Kombinationsdüse (324), und mindestens eine Fluidleitung (332, 334, 336), wobei die Reinigungsanordnung (600) in einer Halteeinrichtung (426) aufgenommen ist, wobei das Modulgehäuse (420) einen Aufnahmekörper (422) aufweist, der
- mindestens eine Aufnahmeöffnung (423) und mindestens eine Sichtöffnung (414) einer Kamerahalterung (424) zum Befestigen einer Kamera (410) aufweist, wobei die mindestens eine Sichtöffnung (414) eine Sicht der Kamera (410) aus dem Modulgehäuse (420) ermöglicht, wobei der Aufnahmekörper (422) des Weiteren
- die Halteeinrichtung (426) aufweist für die Reinigungsanordnung (500), wobei die Reinigungsanordnung (500) wenigstens die Reinigungsdüse (318, 320, 322) und eine Fluidleitung (332, 334, 336) für ein Reinigungsfluid (RF, DL, F) mit mindestens einem Leitungskörper (335, 337) aufweist, wobei die Halteeinrichtung (426) aufweist:
- eine Leitungsaufnahme (441) für die Fluidleitung (332, 334, 336),
- eine Düsenaufnahme (340, 342, 344) für die Reinigungsdüse (318, 320, 322), die derart angeordnet ist, dass
- die mindestens eine Sichtöffnung (414) aus der Reinigungsdüse (318, 320, 322) mit Reinigungsfluid (RF, DL, F) beaufschlagbar ist,
**dadurch gekennzeichnet, dass**
- die Reinigungsanordnung (600) ein Schnellentlüftungsventil (430) aufweist, das ausgebildet ist zum Empfangen von Druckluft (DL) und zum Bereitstellen eines Druckluft-Reinigungsimpulses (DRI) an die Reinigungsdüse (318), wobei
- das Schnellentlüftungsventil (430) in der Halteeinrichtung (426) aufgenommen ist.

2. Spiegelersatzsystem (900) nach Anspruch 1, **dadurch gekennzeichnet, dass** die Reinigungsdüse (318, 320, 322) mit einer Steckverbindung (338) an die Fluidleitung (332, 334, 336) angebunden ist.

3. Spiegelersatzsystem (900) nach Anspruch 1 oder 2, **dadurch gekennzeichnet, dass** die Leitungsaufnahme (441) eine Leitungsführung (450) und/oder einen Leitungshalter (440) aufweist.

4. Spiegelersatzsystem (900) nach Anspruch 3, **dadurch gekennzeichnet, dass** der Leitungshalter (440) ein Leitungsklipp (442) oder ein Leitungshalteband (447) ist und/oder die Leitungsführung (450) als ein Hohlkanal (456) im Aufnahmekörper (422) gebildet ist.

5. Spiegelersatzsystem (900) nach einem der vorherigen Ansprüche, **dadurch gekennzeichnet, dass** der Leitungsanschluss (480) als eine Klemmdurchführung (484) für die Fluidleitung (332, 334, 336) in den Aufnahmekörper (422) gebildet ist.

6. Spiegelersatzsystem (900) nach einem der vorherigen Ansprüche, **dadurch gekennzeichnet, dass** die Fluidleitung (332) eine Druckluft-Fluidleitung (334) für eine Druckluft (DL) aufweist, insbesondere in Form eines Druckluft-Leitungskörpers (335).

7. Spiegelersatzsystem (900) nach einem der vorherigen Ansprüche, **dadurch gekennzeichnet, dass** die Fluidleitung (332) eine Flüssigkeits-Fluidleitung (336) für eine Flüssigkeit (F) aufweist, insbesondere in Form eines Flüssigkeits-Leitungskörpers (337).

8. Spiegelersatzsystem (900) nach einem der vorherigen Ansprüche, **dadurch gekennzeichnet, dass**
- die Halteeinrichtung (426) eine Stellmittelaufnahme (428) für ein Fluidstellmittel (356), insbesondere ein Ventil (360), ein Schnellentlüftungsventil (430), einen Druckzylinder (220) oder eine Pumpe (390), aufweist, wobei die Stellmittelaufnahme (428) eine Halteverbindung (446), insbesondere ein Befestigungsklipp (466) oder ein Halteband (444), aufweist und sich insbesondere an die Leitungsführung (450) anschließt.

9. Spiegelersatzsystem (900) nach Anspruch 8, **dadurch gekennzeichnet, dass**
- die Halteverbindung (446) einen Befestigungsklipp (466) aufweist zum Befestigen des Fluidstellmittels (356).

10. Spiegelersatzsystem (900) nach Anspruch 8 oder 9, **dadurch gekennzeichnet, dass** die Halteeinrichtung (426) ein Aufnahmemerkmal (462), insbesondere einer Aufnahmenut (464), aufweist, das ausgebildet ist, mit einem Positioniermerkmal (434), insbesondere mit einer Positionierleiste (436), eines Stellmittelgehäuses (362) in Eingriff gebracht zu werden.

11. Spiegelersatzsystem (900) nach einem der vorherigen Ansprüche, **dadurch gekennzeichnet, dass** der Leitungshalter als ein Einfach-Leitungshalter (440.1) oder Zweifach-Leitungshalter (440.2), insbesondere Einfach-Leitungsklipp (442.1) oder Zweifach-Leitungsklipp (442.2), ausgebildet ist.

12. Spiegelersatzsystem (900) nach einem der vorherigen Ansprüche, **gekennzeichnet durch**
- mindestens eine Kamera (410), die in der Kamerahalterung (424) des Aufnahmekörpers (422) aufgenommen ist und insbesondere eine in der Sichtöffnung (414) der Kamerahalterung (424) angeordnete Objektivoberfläche (412) aufweist.

13. Spiegelersatzsystem (900) nach einem der vorherigen Ansprüche, **dadurch gekennzeichnet, dass**
- das Schnellentlüftungsventil (430) ein Ventilgehäuse (432) aufweist mit einem Positioniermerkmal (434), insbesondere mit einem Positionierstecker (436), das mit einem Aufnahmemerkmal (462), insbesondere einem Aufnahmesteckanschluss (464) des Aufnahmekörpers (422) in Eingriff gebracht werden kann, um eine Stellmittelposition (438) des Ventilgehäuses (432) relativ zu dem Modulgehäuse (420) festzulegen.

14. Spiegelersatzsystem (900) nach einem der Ansprüche 1 bis 13, **gekennzeichnet durch**
- ein Fluidversorgungsmodul (200), ausgebildet zum Bereitstellen eines Druckluft-Reinigungsimpulses (DRI) und/oder einer Druckluftströmung (DS) und/oder eines Flüssigkeits-Reinigungsimpulses (FRI) und/oder einer Flüssigkeitsströmung (FS).

15. Fahrzeug (1000), insbesondere Nutzfahrzeug (1002) oder PKW (1004), aufweisend:
ein Spiegelersatzsystem (900) nach einem der Ansprüche 1 bis 14, und
- eine Druckluftversorgungsanlage (10) zum Bereitstellen von Druckluft (DL), wobei insbesondere das Spiegelersatzsystem (900) derart angeordnet und ausgebildet ist, dass die Kamera (410) mit einer Objektivoberfläche (412) zur optischen Erfassung (EO) eines Außenbereichs (3000), insbesondere eines rückwärtigen Außenbereichs (3002), des Spiegelersatzsystems (900) angeordnet ist.

## Claims

1. Mirror replacement system (900) for attachment to a vehicle (1000), the system comprising:
- a module housing (420), and
- a cleaning assembly (500) comprising at least one cleaning nozzle (318, 320, 322, 324), in particular a compressed air cleaning nozzle (320), a liquid cleaning nozzle (322) or a combination nozzle (324), and at least one fluid line (332, 334, 336), the cleaning assembly (600) being accommodated in a holding device (426), the module housing (420) having a receiving body (422) which
- has at least one receiving opening (423) and at least one viewing opening (414) of a camera holder (424) for fastening a camera (410), the at least one viewing opening (414) allowing a view of the camera (410) out of the module housing (420), the receiving body (422) furthermore
- having the holding device (426) for the cleaning assembly (500), the cleaning assembly (500) having at least the cleaning nozzle (318, 320, 322) and a fluid line (332, 334, 336) for a cleaning fluid (RF, DL, F), which fluid line has at least one line body (335, 337), the holding device (426) having:
- a line receptacle (441) for the fluid line (332, 334, 336),
- a nozzle receptacle (340, 342, 344) for the cleaning nozzle (318, 320, 322), which is arranged such that
- cleaning fluid (RF, DL, F) can be applied to the at least one viewing opening (414) from the cleaning nozzle (318, 320, 322),
**characterized in that**
- the cleaning assembly (600) has a quick-action ventilating valve (430) which is designed to receive compressed air (DL) and to provide a compressed air cleaning pulse (DRI) to the cleaning nozzle (318),
- the quick-action ventilating valve (430) being accommodated in the holding device (426).

2. Mirror replacement system (900) according to claim 1,
**characterized in that** the cleaning nozzle (318, 320, 322) is connected to the fluid line (332, 334, 336) by means of a plug connection (338).

3. Mirror replacement system (900) according to either claim 1 or claim 2, **characterized in that** the line receptacle (441) has a line guide (450) and/or a line holder (440).

4. Mirror replacement system (900) according to claim 3,
**characterized in that** the line holder (440) is a line clip (442) or a line holding band (447) and/or the line guide (450) is formed as a hollow channel (456) in the receiving body (422).

5. Mirror replacement system (900) according to any of the preceding claims, **characterized in that** the line connector (480) is formed as a clamping bushing (484) for the fluid line (332, 334, 336) in the receiving body (422).

6. Mirror replacement system (900) according to any of the preceding claims, **characterized in that** the fluid line (332) has a compressed air fluid line (334) for compressed air (DL), in particular in the form of a compressed air line body (335).

7. Mirror replacement system (900) according to any of the preceding claims, **characterized in that** the fluid line (332) has a liquid fluid line (336) for a liquid (F), in particular in the form of a liquid line body (337).

8. Mirror replacement system (900) according to any of the preceding claims, **characterized in that**
- the holding device (426) has an actuator receptacle (428) for a fluid actuator (356), in particular a valve (360), a quick-action ventilating valve (430), a pressure cylinder (220) or a pump (390), the actuator receptacle (428) having a holding connection (446), in particular a fastening clip (466) or a holding band (444), and in particular connecting to the line guide (450).

9. Mirror replacement system (900) according to claim 8,
**characterized in that**
- the holding connection (446) has a fastening clip (466) for fastening the fluid actuator (356).

10. Mirror replacement system (900) according to either claim 8 or claim 9, **characterized in that** the holding device (426) has a receiving feature (462), in particular a receiving groove (464), which is designed to be brought into engagement with a positioning feature (434), in particular with a positioning strip (436), of an actuator housing (362).

11. Mirror replacement system (900) according to any of the preceding claims, **characterized in that** the line holder is designed as a single line holder (440.1) or double line holder (440.2), in particular a single line clip (442.1) or double line clip (442.2).

12. Mirror replacement system (900) according to any of the preceding claims, **characterized by**
- at least one camera (410) which is received in the camera holder (424) of the receiving body (422) and in particular has a lens surface (412) arranged in the viewing opening (414) of the camera holder (424).

13. Mirror replacement system (900) according to any of the preceding claims, **characterized in that**
- the quick-action ventilating valve (430) has a valve housing (432) with a positioning feature (434), in particular with a positioning plug (436), which can be brought into engagement with a receiving feature (462), in particular a receiving plug connector (464) of the receiving body (422) in order to determine an actuator position (438) of the valve housing (432) relative to the module housing (420).

14. Mirror replacement system (900) according to any of claims 1 to 13, **characterized by**
- a fluid supply module (200) designed to provide a compressed air cleaning pulse (DRI) and/or a compressed air flow (DS) and/or a liquid cleaning pulse (FRI) and/or a liquid flow (FS).

15. Vehicle (1000), in particular commercial vehicle (1002) or passenger car (1004), comprising:
a mirror replacement system (900) according to any of claims 1 to 14, and
- a compressed air supply system (10) for providing compressed air (DL), wherein, in particular
- the mirror replacement system (900) is arranged and designed such that the camera (410) is arranged with a lens surface (412) for optically detecting (EO) an external region (3000), in particular a rear external region (3002), of the mirror replacement system (900).

## Revendications

1. Système de remplacement de rétroviseur (900) destiné à être monté sur un véhicule (1000), présentant :
- un boîtier de module (420), et
- un agencement de nettoyage (500) comprenant au moins une buse de nettoyage (318, 320, 322, 324), en particulier une buse de nettoyage à air comprimé (320), une buse de nettoyage par liquide (322) ou une buse combinée (324), et au moins une conduite de fluide (332, 334, 336), dans lequel l'agencement de nettoyage (600) est logé dans un dispositif de retenue (426), dans lequel le boîtier de module (420) présente un corps de logement (422) qui
- présente au moins une ouverture de logement (423) et au moins une ouverture de visualisation (414) d'un support de caméra (424) permettant de fixer une caméra (410), dans lequel l'au moins une ouverture de visualisation (414) permet une visualisation de la caméra (410) depuis le boîtier de module (420),
dans lequel corps de logement (422) présente en outre
- le dispositif de retenue (426) pour l'agencement de nettoyage (500), dans lequel l'agencement de nettoyage (500) présente au moins la buse de nettoyage (318, 320, 322) et une conduite de fluide (332, 334, 336) pour un fluide de nettoyage (RF, DL, F), laquelle conduite de fluide comporte au moins un corps de conduite (335, 337), dans lequel le dispositif de retenue (426) présente :
- un logement de conduite (441) pour la conduite de fluide (332, 334, 336),
- un logement de buse (340, 342, 344) pour la buse de nettoyage (318, 320, 322), lequel logement de buse est disposé de telle sorte que
- l'au moins une ouverture de visualisation (414) peut être alimentée en fluide de nettoyage (RF, DL, F) à partir de la buse de nettoyage (318, 320, 322),
**caractérisé en ce que**
- l'agencement de nettoyage (600) présente une soupape d'échappement rapide (430) conçue pour recevoir de l'air comprimé (DL) et pour fournir une impulsion de nettoyage à l'air comprimé (DRI) à la buse de nettoyage (318), dans lequel
- la soupape d'échappement rapide (430) est logée dans le dispositif de retenue (426).

2. Système de remplacement de rétroviseur (900) selon la revendication 1, **caractérisé en ce que** la buse de nettoyage (318, 320, 322) est reliée à la conduite de fluide (332, 334, 336) par un connecteur (338).

3. Système de remplacement de rétroviseur (900) selon la revendication 1 ou 2, **caractérisé en ce que** le logement de conduite (441) présente un guide de conduite (450) et/ou un support de conduite (440).

4. Système de remplacement de rétroviseur (900) selon la revendication 3, **caractérisé en ce que** le support de conduite (440) est un clip de conduite (442) ou une bande de retenue de conduite (447) et/ou le guide de conduite (450) est formé comme un canal creux (456) dans le corps de logement (422).

5. Système de remplacement de rétroviseur (900) selon l'une des revendications précédentes, **caractérisé en ce que** le raccord de conduite (480) est formé comme une traversée de serrage (484) pour la conduite de fluide (332, 334, 336) dans le corps de logement (422).

6. Système de remplacement de rétroviseur (900) selon l'une des revendications précédentes, **caractérisé en ce que** la conduite de fluide (332) présente une conduite de fluide à air comprimé (334) pour un air comprimé (DL), en particulier sous la forme d'un corps de conduite pour air comprimé (335).

7. Système de remplacement de rétroviseur (900) selon l'une des revendications précédentes, **caractérisé en ce que** la conduite de fluide (332) présente une conduite de fluide pour liquide (336) pour un liquide (F), en particulier sous la forme d'un corps de conduite pour liquide (337).

8. Système de remplacement de rétroviseur (900) selon l'une des revendications précédentes, **caractérisé en ce que**
- le dispositif de retenue (426) présente un logement de moyen de réglage (428) pour un moyen de réglage de fluide (356), en particulier une soupape (360), une soupape d'échappement rapide (430), un vérin de pression (220) ou une pompe (390), dans lequel le logement de moyen de réglage (428) présente une liaison de retenue (446), en particulier un clip de fixation (466) ou une bande de retenue (444), et se raccorde en particulier au guide de conduite (450).

9. Système de remplacement de rétroviseur (900) selon la revendication 8, **caractérisé en ce que**
- la liaison de retenue (446) présente un clip de fixation (466) permettant de fixer le moyen de réglage de fluide (356).

10. Système de remplacement de rétroviseur (900) selon la revendication 8 ou 9, **caractérisé en ce que** le dispositif de retenue (426) présente une caractéristique de logement (462), en particulier une rainure de logement (464), qui est conçue pour être mise en prise avec une caractéristique de positionnement (434), en particulier avec une barre de positionnement (436), d'un boîtier de moyen de réglage (362).

11. Système de remplacement de rétroviseur (900) selon l'une des revendications précédentes, **caractérisé en ce que** le support de conduite est conçu sous la forme d'un support de conduite simple (440.1) ou d'un support de conduite double (440.2), en particulier d'un clip de conduite simple (442.1) ou d'un clip de conduite double (442.2).

12. Système de remplacement de rétroviseur (900) selon l'une des revendications précédentes, **caractérisé par**
- au moins une caméra (410) qui est reçue dans le support de caméra (424) du corps de logement (422) et qui présente en particulier une surface d'objectif (412) disposée dans l'ouverture de visualisation (414) du support de caméra (424).

13. Système de remplacement de rétroviseur (900) selon l'une des revendications précédentes, **caractérisé en ce que**
- la soupape d'échappement rapide (430) présente un boîtier de soupape (432) comportant une caractéristique de positionnement (434), comportant en particulier une fiche de positionnement (436), qui peut être mise en prise avec une caractéristique de logement (462), en particulier une fiche de logement (464) du corps de logement (422), pour définir une position de moyen de réglage (438) du boîtier de soupape (432) par rapport au boîtier de module (420).

14. Système de remplacement de rétroviseur (900) selon l'une des revendications 1 à 13, **caractérisé par**
- un module d'alimentation en fluide (200) conçu pour fournir une impulsion de nettoyage à air comprimé (DRI) et/ou un flux d'air comprimé (DS) et/ou une impulsion de nettoyage par liquide (FRI) et/ou un flux de liquide (FS).

15. Véhicule (1000), en particulier véhicule utilitaire (1002) ou voiture de tourisme (1004), présentant :
- un système de remplacement de rétroviseur (900) selon l'une des revendications 1 à 14, et
- une installation d'alimentation en air comprimé (10) destinée à fournir de l'air comprimé (DL), dans lequel en particulier
- le système de remplacement de rétroviseur (900) est disposé et conçu de telle sorte que la caméra (410) est disposée avec une surface d'objectif (412) pour la détection optique (EO) d'une zone extérieure (3000), en particulier d'une zone extérieure arrière (3002), du système de remplacement de rétroviseur (900).
